# EUROPÄISCHE PATENTSCHRIFT

(11) **EP 0 585 404 B1**
(45) Veröffentlichungstag und Bekanntmachung des Hinweises auf die Patenterteilung: **22.11.1995**
(21) Anmeldenummer: 92915048.0
(22) Anmeldetag: 10.07.1992
(51) Int. Cl.: A21C 5/04, A21C 7/00

(54) **VORRICHTUNG ZUM WIRKEN PORTIONIERTER TEIGSTÜCKE**
DEVICE FOR SHAPING-DOUGH PORTIONS
DISPOSITIF DE MISE EN FORME DE DOSES DE PATE

(30) Priorität: 12.07.1991 AT 1410/91; 12.07.1991 AT 1413/91; 12.07.1991 AT 1415/91
(43) Veröffentlichungstag der Anmeldung: 09.03.1994
(73) Patentinhaber: König, Elisabeth, A-8045 Graz (AT)
(72) Erfinder: KÖNIG, Helmut, verstorben (AT)
(74) Vertreter: Wildhack, Helmut, Dipl.-Ing. Dr.
(86) Internationale Anmeldenummer: AT9200095
(87) Internationale Veröffentlichungsnummer: WO9300820

(56) Entgegenhaltungen:
- WO-A-90/11689
- DE-A- 2 939 895
- DE-A- 3 436 258
- US-A- 4 684 040

## Beschreibung

Die Erfindung bezieht sich auf eine Vorrichtung zum Wirken portionierter Teigstücke, bei welcher Teig, gegebenenfalls bereits portioniert, an einer Einbringestelle, insbesondere einer Portionierstelle, in Aufnahmeöffnungen am Mantel einer um eine horizontale Achse durch einen Antrieb schrittweise verdrehbaren Trommel eingefüllt wird, welche Aufnahmeöffnungen über den Umfang der Trommel in gleichmäßigen Abständen voneinander verteilt angeordnet sind, wobei die in den Aufnahmeöffnungen befindlichen Teigstücke durch ein am Umfang der Trommel an einer relativ zur Einbringestelle in Drehrichtung der Trommel versetzten Wirkstelle angeordnetes, durch einen Exzenterzapfen zu einer Kreisbewegung angetriebenes, Wirkwerkzeug gewirkt und danach an einer relativ zur Wirkstelle in Drehrichtung der Trommel versetzten Ablagestelle aus den Aufnahmeöffnungen durch in diesen mittels einer Zwangsführung verstellte Kolben ausgestoßen werden, und wobei vorzugsweise das Volumen der in die Aufnahmeöffnungen eingebrachten Teigmenge durch Veränderung der Lage der Kolben in den Aufnahmeöffnungen an der Einbringestelle wählbar ist.

Solche Vorrichtungen sind bekannt (z.B. AT-PS 341 970). Die bekannte Vorrichtung hat vier Reihen von Aufnahmeöffnungen, die in gleichen Abständen um den Trommelumfang verteilt angeordnet sind, also jeweils um 90° versetzt, wobei der schrittweise Trommelvorschub pro Schritt eine Verdrehung der Trommel um ebenfalls 90° bewirkt. Bei der bekannten Maschine ist an der einen Trommelseite eine Portionierstation angeordnet, an der der Teig in die Aufnahmeöffnungen mittels eines Schiebers eingedrückt und bei der Weiterbewegung der Trommel mittels einer Abscherkante portioniert wird. Im Bereich des Trommelscheitels ist die Wirkstation vorgesehen, an der das Teigstück in eine ballige Form übergeführt wird. An der anderen Trommelseite liegt die Ablagestelle, an der die Teigstücke aus den Aufnahmeöffnungen ausgestoßen werden. Durch die Zwangsführung lassen sich die Kolben an der Portionierstelle zurückziehen, was eine Ansaugung des Teiges bewirkt. Durch Veränderung des Ausmaßes, um welches die Kolben an der Portionierstelle zurückgezogen werden, läßt sich eine Änderung des Teigvolumens, welches die Aufnahmeöffnung aufzunehmen vermag, erzielen, was gleichbedeutend ist mit einer Volumenverstellung bzw. Gewichtsverstellung der portionierten Teigstücke. Jedoch kann der Bereich dieser Gewichtsverstellung bei der bekannten Maschine nicht zu groß gewählt werden, da die Relativverstellung der Ausgangs- bzw. Endlage der Kolben in den Aufnahmeöffnungen an der Portionierstelle Rückwirkungen hat auf die Verhältnisse an der Wirkstelle und auch an der Ablagestelle.

Die Erfindung setzt sich zur Aufgabe, den Variationsbereich für das Teigportionengewicht größer zu machen, ohne daß die Verhältnisse an der Wirkstelle und an der Auswerfstelle der Teigstücke verschlechtert werden. Die Erfindung löst diese Aufgabe dadurch, daß die Aufnahmeöffnungen in zumindest zwei unterschiedlichen Größen, miteinander in Umfangsrichtung der Trommel alternierend, vorgesehen sind und die Schritte der Drehbewegung der Trommel dem Abstand zweier benachbarter gleichgroßer Aufnahmeöffnungen, in Umfangsrichtung der Trommel gemessen, entsprechen, wobei dem Antrieb für die Drehung der Trommel eine Umschalteinrichtung zur Verdrehung der Trommel um den Abstand zweier unterschiedlicher Aufnahmeöffnungen zugeordnet ist, so daß in den Pausen zwischen den Trommelschritten jeweils gleichgroße Aufnahmeöffnungen, jedoch wählbarer Größe, der Einbringestelle, der für alle Größen der Aufnahmeöffnungen gemeinsamen Wirkstelle und der Ablagestelle gegenüberliegen, und daß der Radius der Kreisbewegung des Wirkwerkzeuges durch Verstellung der Exzentrizität des Exzenterzapfens veränderbar ist. Die Anordnung unterschiedlicher Größen der Aufnahmeöffnungen an der Trommel bringt die Möglichkeit, von vorneherein zwei unterschiedlich große Teigvolumen zu behandeln, wobei, wenn das eingangs beschriebene Prinzip der Volumensänderung an der Einbringestelle bzw. Portionierstelle beibehalten wird, sich für jede der beiden Größen der eingangs erwähnte Variationsbereich ergibt. Es kann daher bei zweckmäßiger Ausbildung der Maschine der Variationsbereich gegenüber der bekannten Konstruktion bei Verwendung zweier unterschiedlicher Größen der Aufnahmeöffnung verdoppelt, bei Anordnung von drei verschiedenen Größen verdreifacht usw. werden. In der Regel kommt man mit zwei Größen in der Praxis aus.

Durch die Umschalteinrichtung läßt sich problemlos von einer Größe auf die andere Größe übergehen. Vorteilhaft ist ferner, daß für alle Größen der Aufnahmeöffnungen dasselbe Wirkwerkzeug zur Anwendung kommt, so daß bezüglich der Lage des Wirkwerkzeuges keine Änderungen erforderlich sind, da die Umschalteinrichtung gewährleistet, daß stets die gewünschte Aufnahmeöffnungsgröße dem Wirkwerkzeug zugeführt wird. Da jedoch die Erfindung von der Erkenntnis ausgeht, daß für unterschiedliche Volumina der zu wirkenden Teigportionen der Wirkprozeß entsprechend angepaßt werden muß sieht die Erfindung eine entsprechende Anpassung der Exzentrizität der Umlaufbewegung des Wirkwerkzeuges vor. Dadurch läßt sich ein großer Gewichtsbereich der zu wirkenden Teigstücke mit gleichbleibend gutem Ergebnis wirken, wobei in der Regel kleinere Teigportionen größere Exzentrizitäten der kreisförmigen Bewegung des Wirkwerkzeuges beim Wirkvorgang benötigen und umgekehrt. Auch unterschiedlichen Qualitäten des zu wirkenden Teiges kann durch diese Anpassung der Bewegung des Wirkwerkzeuges an die jeweils vorliegende Größe der Aufnahmeöffnung Rechnung getragen werden.

Aus der DE-A 3 436 258 ist es zum Teilen von Teigstücken mit großen und kleinen Gewichten bekannt, eine Auswiegetrommel mit unterschiedlich großen Aufnahmeöffnungen zu versehen. Diese bekannte Vorrichtung dient jedoch lediglich zum Teilen der Teigstücke, also zur Portionierung und gibt keinen Hinweis darauf, wo und wie die Teigstücke gewirkt werden sollen.

Gemäß einer bevorzugten Ausführungsform der Erfindung ist die Anordnung so getroffen, daß der Antrieb für die Trommel eine, mit einer, den Schritten der Trommel entsprechenden Rastenreihe zusammenwirkende, insbesondere durch eine Feder belastete Klinke hat und daß diese Klinke durch die Umschalteinrichtung zeitweise, insbesondere für einen der Anzahl der Größen der Aufnahmeöffnungen entsprechenden Bruchteil eines Schrittes der Trommel, ausrückbar ist. Dies ergibt eine besonders einfache, verläßliche Konstruktion. Im Rahmen der Erfindung kann hiebei die Umschalteinrichtung einen im Gestell, insbesondere entgegen der Wirkung einer Feder, geführten Stößel haben, der auf die Klinke wirkt.

Die Anordnung verschieden großer Aufnahmeöffnungen an der Trommel hat in der Regel eine entsprechende Vervielfachung der Anzahl der Aufnahmeöffnungen zur Folge, welche um den Umfang der Trommel verteilt angeordnet sind. So würden aus den vier Aufnahmeöffnungsreihen der eingangs beschriebenen bekannten Vorrichtung bei Anwendung der Erfindung zumindest acht Reihen werden. Dies kann zu den eingangs beschriebenen Problemen bei der Zwangsführung der Kolben führen, insbesondere kann sich herausstellen, daß die Kolben, welche an der Ablagestelle und an der, in Drehrichtung der Trommel gesehen, davor liegenden Öffnungsreihe angeordnet sind, nicht alle in der vollkommen vorgeschobenen Stellung sind, was eine Verletzungsgefahr für die Bedienungsperson bedeutet, da diese dann in die Öffnungen hineingreifen und beim Weiterdrehen der Trommel verletzt werden kann. Um diesen Nachteil zu vermeiden, ist gemäß einer Weiterbildung der Erfindung die Anordnung so getroffen, daß die Kolben an einer Kurvenbahn der Zwangsführung geführt sind, die relativ zur Trommel zumindest in den Bewegungspausen des Vorschubes der Trommel verstellbar ist und daß diese Kurvenbahn zumindest zwei relativ zueinander verstellbare Abschnitte hat, die an relativ zueinander verstellbaren Bauteilen der Zwangsführung angeordnet sind. Dadurch läßt sich durch entsprechende Verstellung der die Zwangsführungsabschnitte tragenden Bauteile stets sicherstellen, daß alle Kolben im Bereich der Ablagestelle die äußerste Stellung erreichen, also mit ihren Stirnflächen bündig mit der Trommeloberfläche abschließen. Aber auch an der Wirkstelle ergeben sich Vorteile, denn es kann dort der Wirkvorgang nach Belieben geändert werden, ohne an die an der Portionierstelle getroffenen Veränderungen gebunden zu sein. Im Rahmen der Erfindung bestehen für diese Relativverstellung der die Abschnitte der Kurvenbahn tragenden Bauteile mehrere Möglichkeiten. So kann erfindungsgemäß die Anordnung so getroffen sein, daß diese Bauteile um ein gemeinsames Zentrum relativ zueinander verdrehbar sind, oder es können diese Bauteile am Umfang gelenkig miteinander verbunden und durch eine mittige Verzahnung od.dgl. spreizbar sein.

Bei der eingangs beschriebenen bekannten Konstruktion sind die Zeiten, welche für den Trommelvorschub und für den Wirkprozeß zur Verfügung stehen, stets einander gleich. Dies kann jedoch nachteilig sein bei bestimmten Teigstückgrößen oder -sorten, die sich in den unterschiedlichen Aufnahmeöffnungen befinden, da ja die erfindungsgemäße Vorrichtung ein breites Variationsgebiet hinsichtlich der Anwendung eröffnet. Um diesen Nachteil zu vermeiden, kann gemäß einer bevorzugten Ausführungsform der Erfindung die Anordnung so getroffen sein, daß der Antrieb für die Trommel und für die Zwangsführung eine Kurvenbahn aufweist, von der sowohl die Vorschubbewegung der Trommel und der Zwangsführung als auch die Rückführung der Zwangsführung relativ zur Trommel abgeleitet sind, wobei die Zeitdauer jedes Bewegungsschrittes der Trommel kürzer ist als die dazwischenliegenden Pausen. Auf diese Weise wird die Zeit, die für den Wirkvorgang zur Verfügung steht, auf Kosten der für den Trommelvorschub benötigten Zeit verlängert, ohne daß die pro Zeiteinheit hergestellte Teigstückanzahl verringert werden muß. Dies sichert in allen Fällen ein einwandfreies Wirkergebnis bei hoher Anzahl der pro Zeiteinheit hergestellten gewirkten Teigportionen.

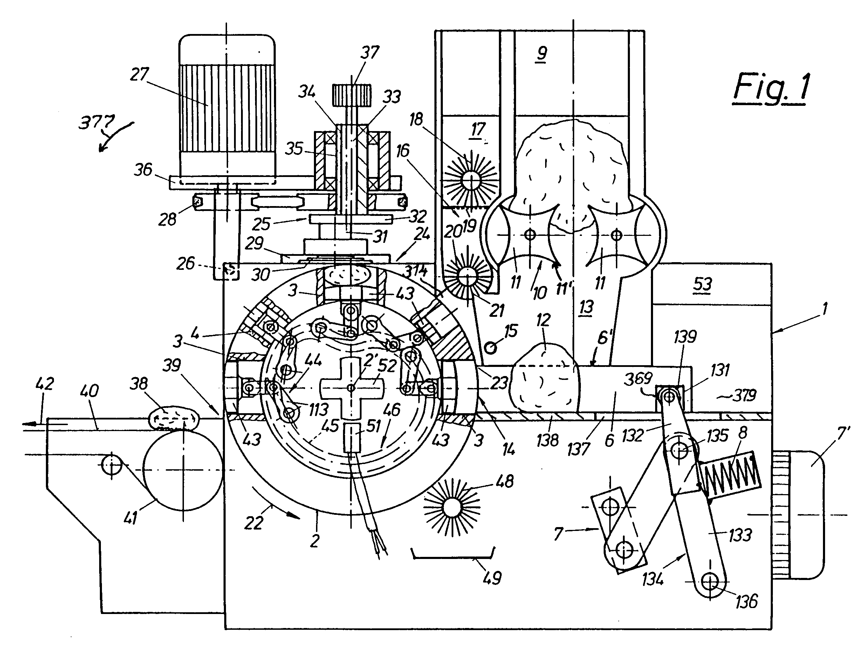

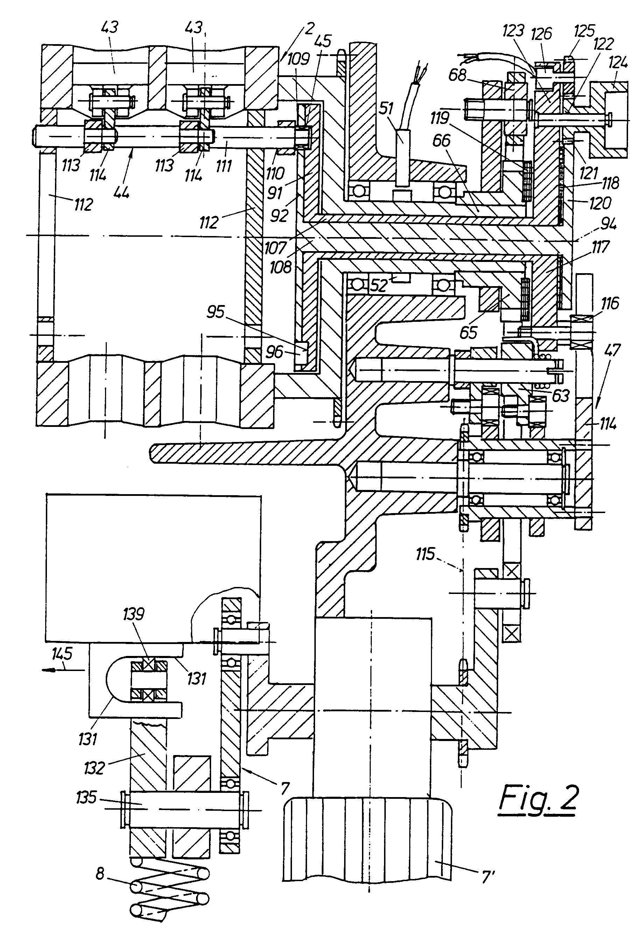

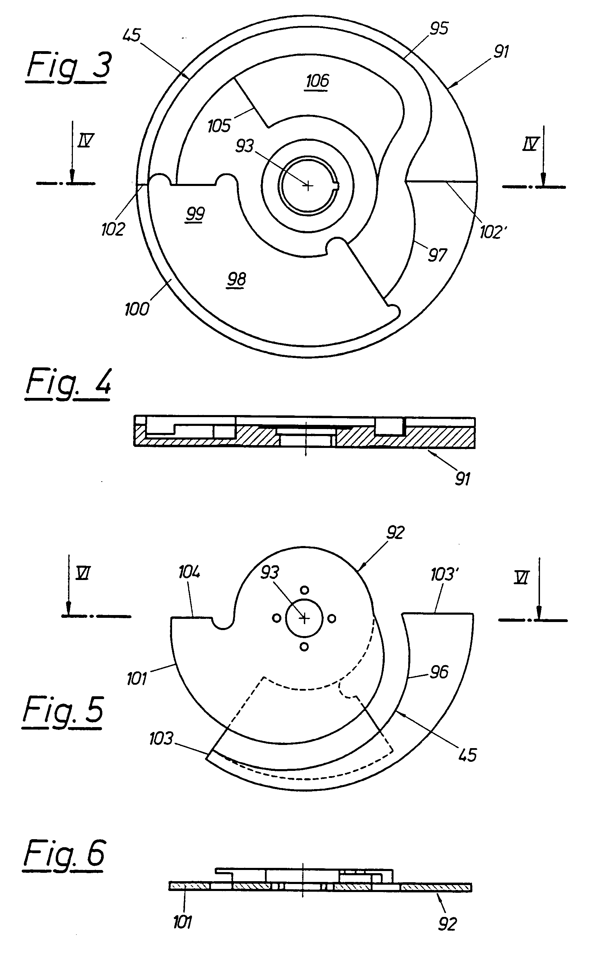

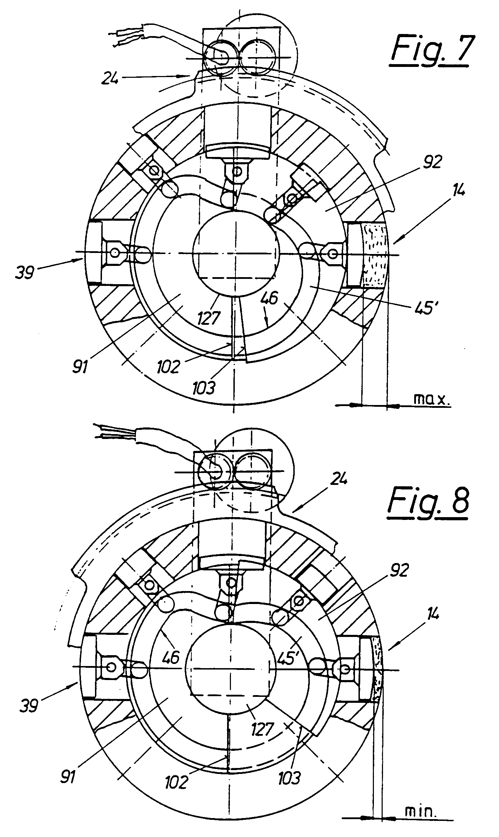

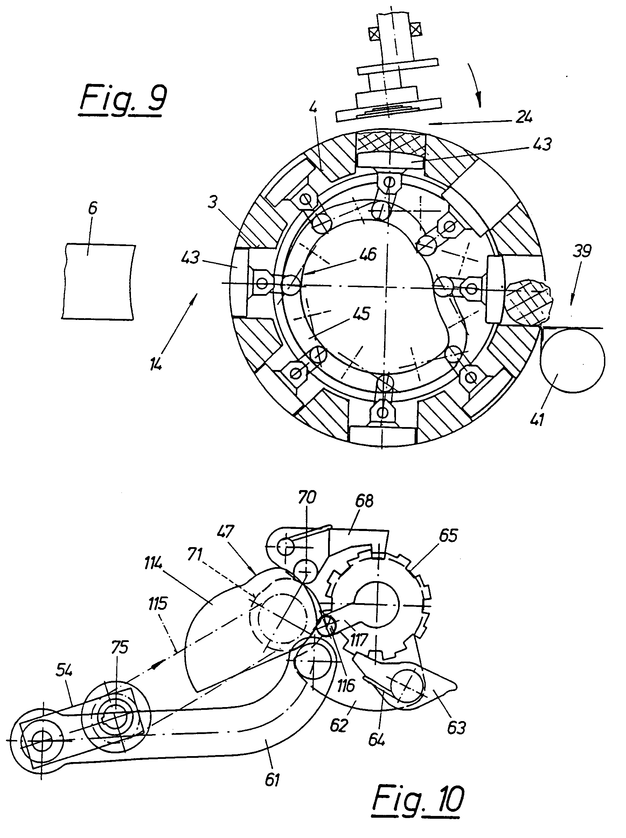

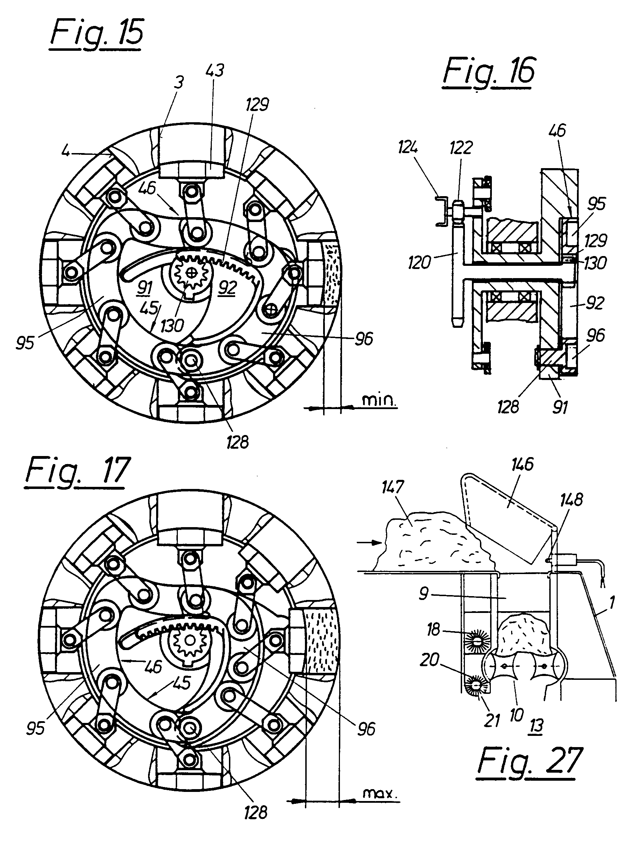

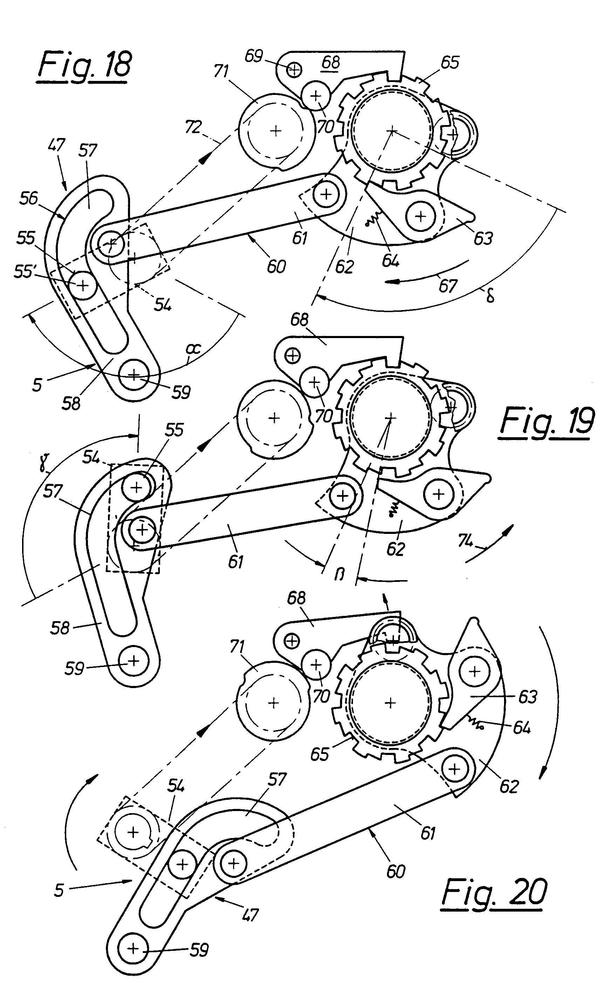

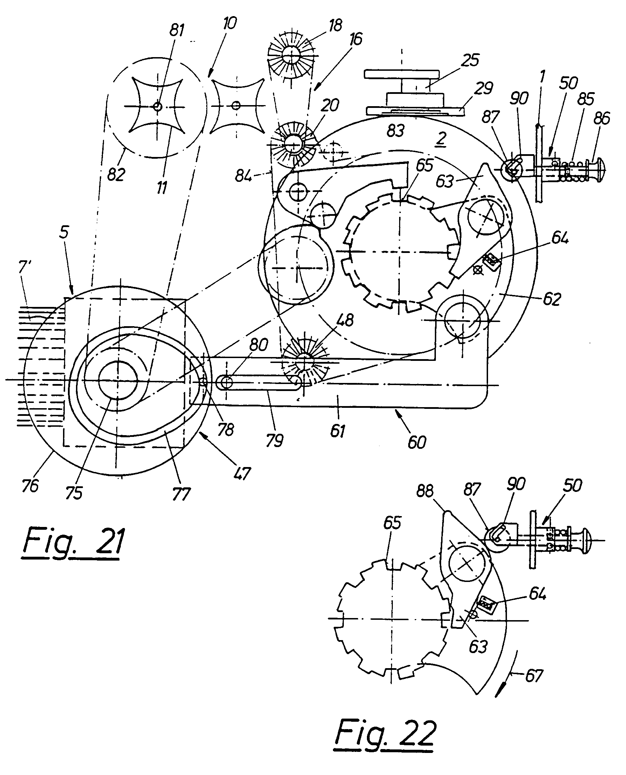

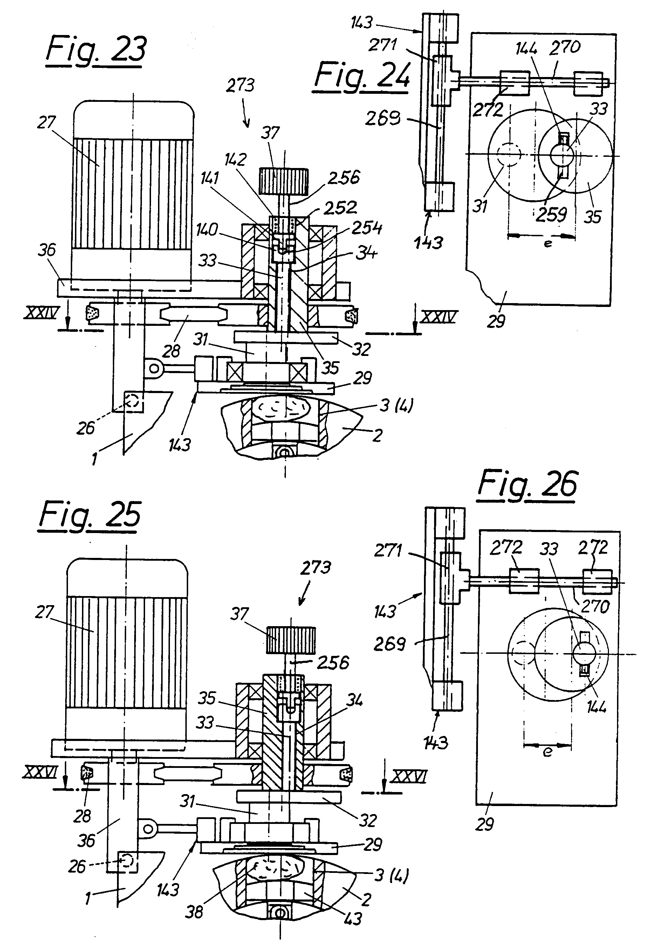

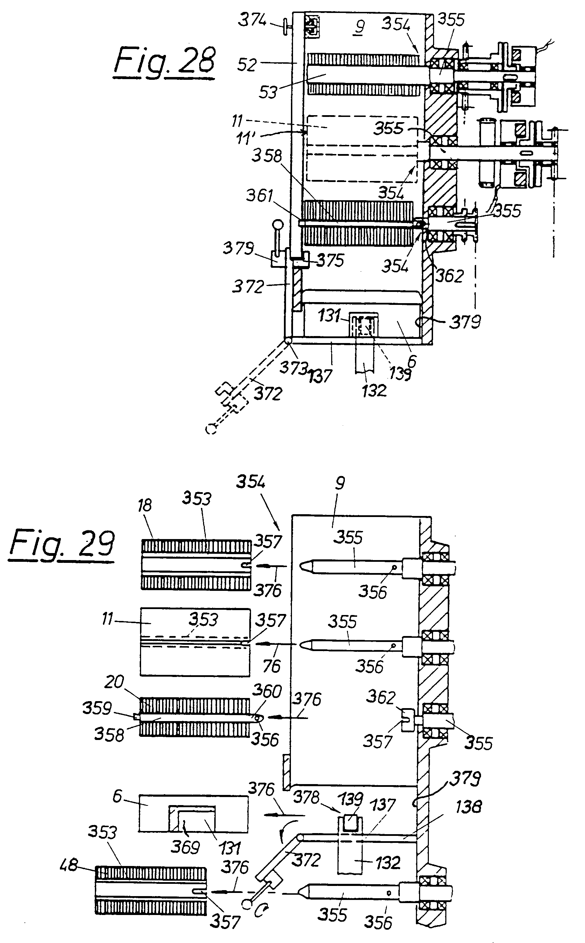

Weitere Kennzeichen und Vorteile der Erfindung ergeben sich aus der Beschreibung von Ausführungsbeispielen des Erfindungsgegenstandes, welche in den Zeichnungen schematisch dargestellt sind. Fig.1 zeigt einen Vertikalschnitt durch die Vorrichtung. Fig.2 ist ein normal zur Schnittebene der Fig.1 liegender Vertikalschnitt durch die Trommelachse, in größerem Maßstab. Die Fig.3 und 5 zeigen die beiden Bauteile einer zweiteiligen Zwangsführung, jeweils in Axialansicht. Die Fig.4 und 6 sind Schnitte nach den Linien IV-IV bzw. VI-VI der Fig.3 bzw. 5. Die Fig.7 und 8 zeigen eine aus zwei Bauteilen nach den Fig.3 bis 6 zusammengesetzte Zwangsführung in zwei verschiedenen Einstellungen. Die Fig.9,11 und 13 zeigen die Zwangsführung in drei aufeinanderfolgenden Phasen des Wirkvorganges und die Fig.10,12 und 14 zeigen den zugehörigen Antrieb in den drei entsprechenden Betriebszeitpunkten. Die Fig.15 und 17 zeigen eine Ausführungsvariante für eine zweiteilige Zwangsführung. Fig.16 zeigt ein Detail der Fig.15 im Schnitt. Die Fig.18 bis 20 zeigen Ausführungsvarianten zu den Fig.10,12 und 14. Fig.21 zeigt eine abgewandelte Ausführungsform in ihren wesentlichen Bauteilen in Ansicht und Fig.22 zeigt ein Detail der Fig.21 in einer anderen Betriebsstellung. Fig.23 zeigt in größerem Maßstab einen Schnitt durch die Verstellmöglichkeit für das Wirkwerkzeug und Fig.24 ist ein Schnitt nach der Linie XXIV-XXIV der Fig.23. Die Fig.25 und 26 sind Schnitte ähnlich zu den Fig.23 bzw. 24, jedoch in einer anderen Einstellung. Die Fig.27, 28 und 29 zeigen jeweils Details im Vertikalschnitt.

Bei der Ausführungsform nach Fig.1 ist in einem Gestell 1 eine Trommel 2 um eine horizontale Achse 2' drehbar gelagert. Die Trommel 2 ist an ihrem Umfang mit unterschiedlich großen Aufnahmeöffnungen 3 bzw.4 für den zu wirkenden Teig versehen, wobei die größeren Aufnahmeöffnungen 3 alternierend mit den kleineren Aufnahmeöffnungen 4 über den Umfang der Trommel 2 verteilt in gleichmäßigen Abständen angeordnet sind. Zweckmäßig sind diese Aufnahmeöffnungen in Reihen angeordnet, welche parallel zur Trommelachse 2' verlaufen. Die Trommel wird durch einen Antrieb 5 (Fig.2,18 bis 20) so schrittweise bewegt, daß jeweils eine Aufnahmeöffnung 3 bzw.4 bei jedem Schritt der Trommelbewegung zu einer Portionierstelle 14 gelangt, an welcher der Teig mittels eines von einem Schieber 6 gebildeten Eindrückwerkzeuges 6' in die jeweilige Aufnahmeöffnung eingedrückt wird. Der Schieber 6 ist im Gestell 1 in einer Führung 379 (Fig.1,28,29) verschiebbar gelagert und wird durch einen vom Hauptmotor 7' angetriebenen Kurbelantrieb 7 hin- und herbewegt. In den Kurbelantrieb 7 ist eine Zugfeder 8 eingeschaltet, welche verhindert, daß der Teig bei der Vorwärtsbewegung des Schiebers 6 zu stark gequetscht wird. Der zu portionierende Teig wird in einen Einfüllschacht 9 eingefüllt und mittels einer Vorportioniereinrichtung 10 vorportioniert, welche aus Vorportionierorganen 11' in Form zweier auf gleicher Höhe im Einfüllschacht 9 angeordneter, um horizontale Achsen im Gegensinn umlaufender Sternwalzen 11 besteht, die intermittierend in Abhängigkeit vom Teigvolumen 12 angetrieben sind, welches sich in einer unterhalb der Sternwalzen 11 angeordneten Kammer 13 befindet, aus welcher der Teig 12 durch den Schieber 6 eingedrückt und dabei in der Kammer 13 verdrängt wird. Steht genügend Teig in der Kammer 13 zur Verfügung, so wird bei dieser Teigverdrängung ein Fühler 15 betätigt, welcher einen Impuls an eine Steuerung für den Antrieb der Sternwalzen 11 abgibt. Dieser Fühler kann z.B. eine Lichtschranke sein oder ein auf die Annäherung feuchter Masse ansprechender Näherungsfühler, z.B. ein kapazitiver Fühler, oder eine in der Kammer 13 oberhalb der Bewegungsbahn des Schiebers 6 schwenkbar gelagerte Stange, die durch den verdrängten Teig hochgehoben wird. Fallen die vom Fühler 15 abgegebenen Impulse - gegebenenfalls für eine einstellbare Anzahl von Hüben des Schiebers 6 - aus, so bewirkt die Steuerung, daß mittels der Sternwalzen 11 Teig in die Kammer 13 entweder für eine bestimmte Zeit nachgefördert wird, oder so lange, bis der Fühler 15 wieder anspricht.

Das in der Kammer 13 befindliche Teigvolumen 12 wird von einer Bemehlungsvorrichtung 16 an der Eindrückseite bemehlt. Hiezu läuft in einer Mehlkammer 17 eine Dosierbürste 18 um, welche durch ein Dosiergitter 19 mit verstellbaren Gitteröffnungen Mehl auf eine Verteilerbürste 20 wirft, welche das Mehl durch eine Öffnung 21 in die Kammer 13 schleudert. Der Antrieb dieser Bemehlungsvorrichtung 16, insbesondere ihrer Dosierbürste 18, kann in gleicher Weise vom Fühler 15 gesteuert sein wie der Antrieb der Vorportioniereinrichtung 10.

Der in die jeweilige Aufnahmeöffnung 3 bzw.4 eingedrückte Teig wird bei der Weiterbewegung der Trommel 2 in Richtung des Pfeiles 22 durch eine Abscherkante 23 abgeschert, wodurch die eigentliche Portionierung erfolgt. Das in der Aufnahmeöffnung befindliche Teigstück gelangt dann nach einer Drehung der Trommel 2 um 90° zu einer Wirkstelle 24, die sich im Gereiche des oberen Trommelscheitels befindet. Dort ist am Gestell 1 eine Wirkvorrichtung 25 vorgesehen, die von einem Motor 27 über einen Keilriementrieb 28 angetrieben wird und ein Wirkwerkzeug 29 in Form einer Platte hat, die beim Wirkvorgang eine kreisende Bewegung relativ zu der ihr benachbarten Aufnahmeöffnung vollführt und an ihrer der Trommel 2 zugewendeten Seite mit stufenförmig abgesetzten Vertiefungen 30 versehen ist (siehe auch Fig.23 bis 26). Das Wirkwerkzeug 29 ist drehbar an einem Exzenterzapfen 31 gelagert, der an einer Scheibe 32 befestigt ist, die am unteren Ende eines zweiten Exzenterzapfens 33 sitzt. Dieser weitere Exzenterzapfen 33 ist in eine Aufnahme 34 verdrehbar eingesetzt, die von einer exzentrischen Bohrung einer Antriebswelle 35 gebildet ist, die vom Keilriementrieb 28 angetrieben ist und in einer Halterung 36 gelagert ist, die auch den Motor 27 trägt und um eine Achse 26 am Gestell 1 schwenkbar befestigt ist, so daß die Wirkvorrichtung 25 zwecks Reinigung od.dgl. vom Gestell 1 abschwenkbar ist. Der in der Antriebswelle verdrehbare zweite Exzenterzapfen 33 ist hinsichtlich seiner Drehlage arretierbar und trägt an seinem oberen Ende eine Handhabe 37 zur einstellbaren Verstellung. Dadurch läßt sich der Radius der Kreisbewegung des Wirkwerkzeuges 29 auch bei laufendem Betrieb ändern, so daß der Wirkeffekt auf die vorliegenden Verhältnisse, insbesondere die Größe und die Qualität des Teigstückes, abgestimmt werden kann. Dies wird später noch näher beschrieben.

Die fertig gewirkten Teigstücke 38 werden an einer Ablegestelle 39 aus den Aufnahmeöffnungen 3 bzw. 4 ausgestoßen und auf ein Förderband 40 abgelegt, das um eine Umlenkrolle 41 geführt ist, die nahe der Trommel 2 angeordnet ist. Um einen sicheren Übergang des auszustoßenden Teigstückes 38 zu gewährleisten, kann das Förderband 40 mit Vorlauf angetrieben sein, d.h. es setzt sich in Richtung des Pfeiles 42 in Bewegung, bevor noch das Teigstück ausgestoßen wird. Diese Ausstoßung wird hervorgerunfen durch eine radiale Auswärtsbewegung eines in jeder Aufnahmeöffnung 3,4 geführten Kolbens 43. Alle Kolben 43 sind über ein Gestänge 44 an einer Kurvenbahn 45 einer Zwangsführung 46 derart geführt, daß eine Relativverdrehung dieser Kurvenbahn 45 in Bezug auf die Trommel 2 eine radiale Bewegung des Kolbens 43 in der jeweiligen Aufnahmeöffnung, entweder nach innen oder nach außen, zur Folge hat. Zur Erzeugung dieser Relativverdrehung dient ein später näher beschriebener Antrieb 47. Im wesentlichen ist die Kurvenbahn 45 so geformt, daß die während der Bewegungspausen der schrittweisen Trommelbewegung erfolgende Relativverdrehung der Kurvenbahn 45 an der Portionierstelle 14 ein Zurückziehen der Kolben 43 bewirkt, zwecks Ausübung eines Ansaugeffektes auf den zu portionierenden Teig. An der Wirkstelle 24 erfolgt eine weitere Zurückziehung des Kolbens 43, um dem durch den Wirkvorgang allmählich in eine ballige Form übergeführten Teigstück mehr Platz zu geben. An der Ablegestelle 39 werden die Kolben 43 hingegen bis zum Trommelumfang nach außen geschoben und dadurch die Teigstücke 38 aus den Aufnahmeöffnungen 3 bzw.4 ausgeworfen.

An der Trommel gegebenenfalls anhaftende Teigreste werden durch eine Reinigungsbürste 48 abgestreift und auf eine Auffangtasse 49 geworfen.

Es ist jeweils nur eine Größe der Aufnahmeöffnungen 3 bzw.4 wirksam. Um von den großen Aufnahmeöffnungen 3 auf die kleinen Aufnahmeöffnungen 4 oder umgekehrt übergehen zu können, ist eine Umschalteeinrichtung 50 (Fig.21,22) vorgesehen, deren Funktion später näher erläutert wird. Die jeweils eingestellte Öffnungsgröße kann mittels eines Fühlers 51 (Fig.1) abgefühlt werden, der mit einem den größeren Aufnahmeöffnungen 3 zugeordneten, auf der Trommelwelle befestigten Geberkreuz 52 zusammenwirkt. Fühlt der Fühler 51 in der Bewegungspause der Trommel 2 einen ihm benachbarten Vorsprung des Geberkreuzes 52, so sind die größeren Aufnahmeöffnungen 3 wirksam, ansonsten die kleineren Aufnahmeöffnungen 4. Die Auswertung der vom Fühler 51 gelieferten Signale kann ebenso wie die Steuerung der Antriebe der Vorportioniereinrichtung 10 und bzw. oder der Bemehlungsvorrichtung 16 durch eine in einem Schaltkasten 53 befindliche Elektronik erfolgen.

Es ist zweckmäßig, die für den Wirkvorgang an der Wirkstelle 24 für jedes Teigstück 38 zur Verfügung stehende Zeit länger zu bemessen als jene Zeit, welche benötigt wird, um einen Vorschubschritt der Trommel 2 zu vollführen, also z.B. eine Aufnahmeöffnung 3 bzw. 4 von der Portionierstelle 14 zur Wirkstelle 24 bzw. von dieser zur Ablagestelle 39 zu führen. Die Fig.18 bis 20 zeigen hiezu geeignete Antriebe 5 für die Trommel bzw. 47 für die Zwangsführung 46. Vom Hauptmotor 7' (Fig.1) wird über ein Getriebe eine Kurbel 54 gedreht, die eine auf einem Zapfen 55 gelagerte drehbare Rolle 55' trägt, die in einem eine Kurvenbahn 56 bildenden gekrümmten Schlitz 57 eines Schwenkhebels 58 geführt ist, der um eine horizontale Achse 58 schwenkbar im Gestell 1 der Vorrichtung gelagert ist und einen Bauteil eines Gestänges 60 bildet, welches für die Bewegung der Trommel 2 bzw. der Zwangsführung 46 dient. Dieses Gestänge 60 hat eine Stange 61, deren eines Ende am Schwenkhebel 58 angelenkt ist und deren anderes Ende mit einem Schwingarm 62 gelenkig verbunden ist, der auf die Welle der Trommel 2 drehbar aufgesetzt und mit der Zwangsführung 46 drehschlüssig verbunden ist, z.B. mittels einer Welle, welche durch hohle Wellenstummel der Trommel 2 hindurchgeführt ist, die an den beiden Seitenschildern der Trommel 2 befestigt sind. Der Schwingarm 62 trägt eine auf ihm schwenkbar gelagerte Klinke 63, die durch eine Feder 64 gegen eine Rastenreihe 63, insbesondere einen Rastenkranz, gedrückt wird, die drehschlüssig mit der Welle 66 der Trommel 2 verbunden ist. Bei der Vorschubbewegung der Trommel 2 wird über den Antrieb 5 der Schwingarm 62 in Richtung des Pfeiles 67 (Fig.3) verschwenkt, wobei die Klinke 63 in eine Rast der Rastenreihe 65 einrastet und dadurch die Trommel 2 mitnimmt. Während der Bewegungspausen der schrittweisen Trommelbewegung rastet eine weitere Klinke 68, welche um eine Achse 69 im Gestell 1 schwenkbar gelagert ist, in eine Rast der Rastenreihe 65 ein und hält dadurch die Trommel 2 gegen Verdrehung fest. Die Klinke 68 trägt eine auf ihr drehbar gelagerte Rolle 70, die entlang des Umfanges einer Nockenscheibe 71 geführt ist, die vom Hauptmotor 7' über einen Kettentrieb 72 verdreht wird. Die Form des Umfanges der Nockenscheibe 71 bestimmt, wann die Klinke 68 aus der Rastenreihe 65 ausgehoben wird und dadurch die Trommel 2 für eine Verdrehung freigibt.

Der Antrieb 47 für die Verdrehung der seitlich der Trommel 2 angeordneten Zwangsführung 46 (Fig.2), welche zur Verstellung der Kolben 43 dient, erfolgt ebenfalls vom Hauptmotor 7' über die Kurbel 54 (Fig.18 bis 20) aus und benützt ebenfalls das Gestänge 60. Hiezu ist eine die Zwangsführung 46 tragende Welle, welche hier der Einfachheit halber als Einfachwelle angenommen sei, drehschlüssig mit dem Schwingarm 62 verbunden. Jede Verschwenkung des Schwingarmes 62, sei es beim Trommelvorschub in Richtung des Pfeiles 22 (Fig.1) oder während der Bewegungspause der Trommelbewegung in der entgegengesetzten Richtung, bewirkt daher eine entsprechende Verschwenkung der Zwangsführung 46 um die Achse dieser Welle.

Die Verhältnisse, insbesondere die Form des gebogenen Schlitzes 57 im Schwenkhebel 58, sind nun so gewählt, daß sich für die Trommelbewegung (Vorschub von Position zu Position) kürzere Zeitspannen ergeben als für die Verdrehung der Zwangsführung 46 während des Stillstandes der Trommel 2. Da die Antriebe 5,47 auf der anderen Seite der Trommel 2 liegen als die Betrachterseite der Fig.1, sind die Lagen der in den Fig.18 bis 20 dargestellten Bauteile seitenverkehrt, so daß die Portionierstelle 14 links und die Ablagestelle 39 rechts liegen. Den Fig.18 bis 20 zugeordnet sind die Fig.9,11 und 13, welche die Relativstellung von Trommel 2 und Zwangsführung 46 sowie die dadurch hervorgerufene Bewegung der Kolben 43 anschaulich zeigen.

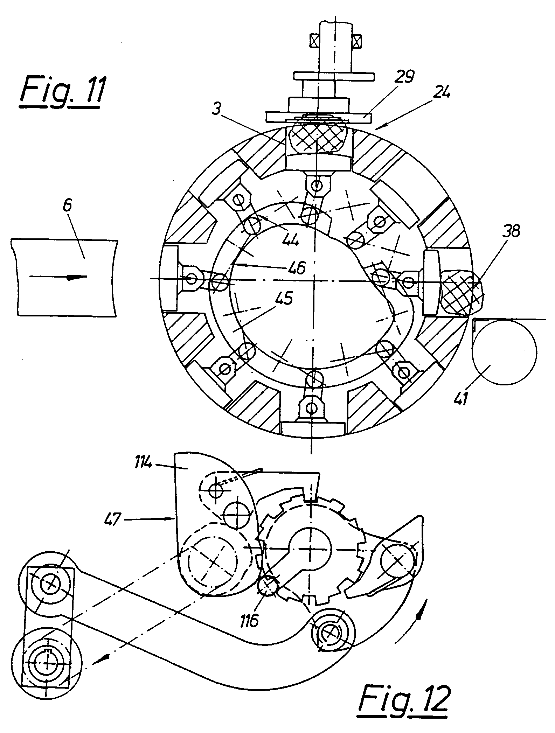

Die Fig.18 und 9 zeigen die Verhältnisse vor Beginn des Wirkvorganges. Es ist ersichtlich, daß während eines Drehwinkels α der Kurbel 54 von etwa 120° der Vorschub der Trommel 2 um 90° erfolgt und zwar harmonisch beschleunigend ohne Stoß, ebenso harmonisch verzögernd. Der an der Wirkstelle 24 (Fig.9) befindliche Kolben 43 befindet sich in einer Mittelstellung, entsprechend dem an der Portionierstelle 14 ausgewogenen Teigvolumen. Sobald der Vorschub der Trommel 2 beendet ist, erlaubt es die Nockenscheibe 71 der Klinke 68, in die Rastenreihe 65 einzurasten, wodurch die Trommel 2 gegen Verdrehung blockiert wird. Es beginnt nun bei der Weiterdrehung der Kurbel 54 der Wirkvorgang (Fig.11,19). Hiebei wird durch Verschiebung der Stange 61 nach rechts (Fig.19) der Schwingarm 62 in Richtung des Pfeiles 74 verschwenkt, jedoch anfänglich nur um ein geringes Maß (Winkel β), obwohl die Kurbel 54 sich während dieser Zeit um einen erheblich größeren Winkel γ, welcher wieder etwa 120° beträgt, verdreht. Diese relativ geringe Verschwenkung des Schwingarmes 62 hat eine ebenso geringe Verdrehung der Zwangsführung 46 zur Folge, wodurch der an der Wirkstelle 24 befindliche Kolben 43 zu Beginn des Wirkvorganges nur verhältnismäßig wenig in seiner Aufnahmeöffnung 3 zurückgezogen wird. Für diese Anfangsphase des Wirkvorganges steht daher etwa ein Drittel der Gesamtzeit des Zyklus zur Verfügung, oder etwa ebensoviel Zeit wie für den Trommelvorschub (Winkel α, Fig.18).

Die Form des Schlitzes 57 im Schwenkhebel 58 ist abgestimmt auf die Form der Kurvenbahn 45 der Zwangsführung 46, so daß die an der Wirkstelle 24 nötige Rückzugsgeschwindigkeit des Kolbens 43 mit der gewünschten Größe erfolgt.

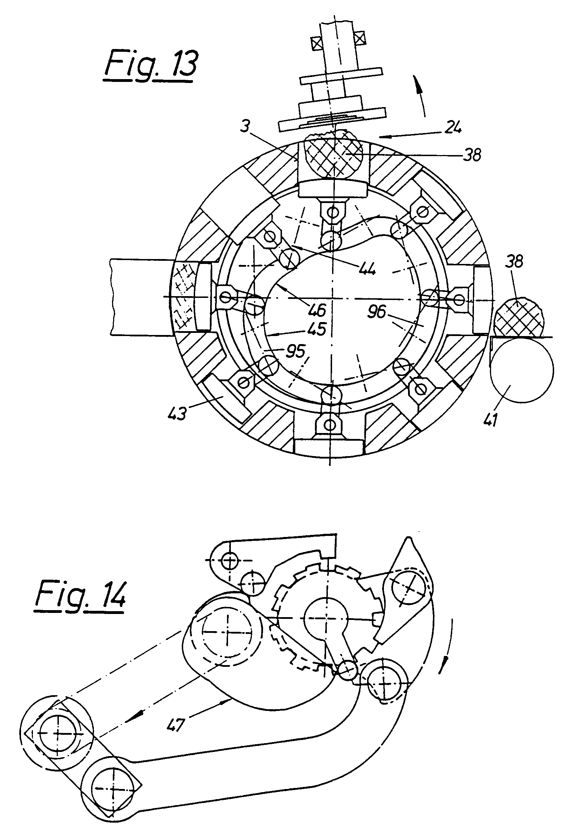

Beim Weiterdrehen der Kurbel 54 (Fig.13,20) erfolgt dann anschließend an den Winkel δ (Fig.19) eine beschleunigte Verschwenkung des Schwingarmes 62 und damit eine raschere Verdrehung der Zwangsführung 46, was eine raschere Zurückziehung des Kolbens 43 in seiner Aufnahmeöffnung 3 bzw.4 in der Endphase des Wirkvorganges zur Folge hat. Die Fig.13 und 20 zeigen die Verhältnisse nach Beendigung des Wirkvorganges, wenn die Klinke 68 durch die Nockenscheibe 71 ausgeschwenkt wird, so daß die Trommel 2 für die Verdrehung in Richtung des Pfeiles 22 freigegeben wird. Der Trommelvorschub erfolgt um 90° (Winkel δ in Fig.18) und das Spiel beginnt dann von Neuem.

Wie die Fig.18 bis 20 zeigen, spiegelt sich das verkürzte Verhältnis der Trommelbewegungszeit im Vergleich zur Wirkzeit in der Form der Nockenscheibe 71 wieder. Ihr erhöhter Nockenteil, welcher eine Ausschwenkung der Klinke 68 beim Trommelvorschub bewirkt, erstreckt sich nur über etwa ein Drittel des Umfanges der Nockenscheibe 71, wogegen zwei Drittel dieses Umfanges der für den Wirkvorgang zur Verfügung stehenden Zeit entsprechen.

Eine Variante hiezu ist in den Fig.21 und 22 dargestellt. Die Abtriebswelle 75 des Motors 7' trägt eine Scheibe 76, an der eine endlose Kurvenschleife 77 befestigt ist, in der ein Zapfen 78 geführt ist, der auf der Stange 61 des Gestänges 60 sitzt, mit welchem die Antriebe 5,47 für die Trommel 2 bzw. die Zwangsführung 46 mit dem Schwingarm 62 verbunden sind. Die Stange 61 hat einen Schlitz 79, in den ein am Gestell 1 befestigter Zapfen 80 eingreift, welcher die Stange 61 schwenkbar und verschiebbar hält. Durch die exzentrische Anordnung der Kurvenschleife 77 in Bezug auf die Abtriebswelle 75 werden sinngemäß dieselben Effekte erzielt wie dies anhand der Fig.18 bis 20 beschrieben wurde.

Fig.21 zeigt auch den Antrieb für die Vorportioniereinrichtung 10 und für die Bemehlungsvorrichtung 16. Auf der Abtriebswelle 75 sitzt ein Kettenrad, das über eine Kette ein auf der Welle 81 der einen Sternwalze 11 sitzendes Kettenrad 82 antreibt. Dieses Kettenrad 82 ist mittels einer Magnetkupplung mit der Welle 81 gekuppelt, welche Kupplung vom Fühler 15 (Fig.1) bzw. über die im Schaltkasten 53 angeordnete Elektronik wie beschrieben gesteuert wird. Die beiden Sternwalzen 11 sind mittels Zahnrädern miteinander gekuppelt, so daß sie synchron mit einander entgegengesetzten Drehrichtungen umlaufen.

Für die Bemehlungsvorrichtung 16 ist der Antrieb von einem auf die Welle der Trommel 2 aufgesetzten Kettenrad 83 abgeleitet, das über eine Kette 84 sowohl die Bemehlungsvorrichtung 16 antreibt, und zwar deren untere Verteilerbürste 20, als auch die Reinigungswalze 48. Die beiden Bürstenwalzen 18,20 der Bemehlungsvorrichtung 16 sind miteinander über einen Kettentrieb gekuppelt, wobei das der Dosierwalze 18 zugeordnete Kettenrad über eine Magnetkupplung mit der dieser Dosierbürste 20 zugeordneten Welle verbunden ist. Auch diese Magnetkupplung kann vom Fühler 15, gegebenenfalls mit einer einstellbaren Verzögerungszeit, bzw. über die im Schaltkasten 53 befindliche Elektronik gesteuert werden.

Die Umschalteinrichtung 50 zur Umschaltung von den kleineren Aufnahmeöffnungen 4 auf die größeren Aufnahmeöffnungen 3 bzw. umgekehrt, hat einen im Gestell 1 entgegen der Wirkung einer Feder 85 verschiebbar geführten Stößel 86, der an seinem inneren Ende eine Rolle 87 trägt, die mit der am Schwingarm 62 schwenkbar gelagerten Klinke 63 zusammenwirkt. Soll umgeschaltet werden, so wird der Stößel in die in Fig.22 dargestellte Lage entgegen der Wirkung der Feder 85 eingedrückt, so daß bei der Vorschubbewegung der Trommel (Pfeil 67) die Rolle 87 zur Anlage an die Klinke 63 gelangt und dadurch diese Klinke entgegen der Wirkung der Feder 84 aushebt. Dadurch wird die Mitnahme der Trommel 2 bei der Verschwenkung des Schwingarmes 62 in Richtung des Pfeiles 87 so lange unterbrochen, bis eine Nase 88 an der Rolle 87 zur Anlage kommt und dadurch den Stößel 86 aus einer Kugelrast 89 drückt, so daß der Stößel in die Ausgangslage (Fig.21) unter der Wirkung der Feder 85 zurückgeführt wird. Die Klinke 63 rastet dann unter der Wirkung der Feder 64 in die nächstfolgende Rast der Rastenreihe 65 ein.

Wird der Stößel 86 betätigt, während die Zwangsführung 46 relativ zur Trommel 2 verschwenkt wird, die Verschwenkung des Schwingarmes 62 also entgegen der Richtung des Pfeiles 67 erfolgt, dann drückt die Nase 88 der Klinke 63 die Rolle 87 entlang einer Führung 90 zurück, so daß die Rolle 87 ausweichen kann. Sobald der Trommelvorschub einsetzt, gleitet die Rolle 87 wieder in der Führung 90 nach unten in die in Fig.21 dargestellte Lage und kommt daher wie vorhin beschrieben zur Wirkung.

Um die Zwangsführung 46 an einer Bearbeitungsstelle für die Teigstücke 38, z.B. an der Portionierstelle 14 zwecks Veränderung des Auswiegegewichtes der Teigstücke, ändern zu können, ohne daß sich diese Änderung auf die Verhältnisse bei der Wirkstelle 24 oder bei der Ablagestelle 39 auswirkt, besteht jede Zwangsführung 46 aus zumindest zwei relativ zueinander verstellbaren Bauteilen. Die in der Zeichnung dargestellten Ausführungsbeispiele zeigen der Einfachheit halber nur zwei solche Bauteile 91,92 (Fig.2 bis 8 und 16,17), jedoch können auch drei oder mehr solche Bauteile vorgesehen sein. Gemäß der Ausführungsform nach den Fig.2 bis 8 sind die beiden Bauteile 91,92 um ein gemeinsames Zentrum 93 herum schwenkbar, welches Zentrum mit der Achse 94 (Fig.2) der Trommel 2 zusammenfällt. Jeder der beiden Bauteile 91,92 trägt einen Abschnitt 95 bzw.96 der Kurvenbahn 45, welche beiden Abschnitte sich wirkungsmäßig in jeder relativen Schwenklage der beiden Bauteile 91,92 so ergänzen, daß alle Kolben 43 stets sicher in radialer Richtung geführt sind und daher weder nach außen noch nach innen ausweichen können. Die beiden Bauteile 91,92 überlappen sich hiebei in der Regel teilweise (Fig.2), der Grad der Überlappung ist durch die relative Verschwenkung der beiden Bauteile bestimmt. Die erwähnte Variationsmöglichkeit ergibt sich dadurch, daß am Bauteil 91 (Fig.3,4) der Abschnitt 95 der Kurvenbahn 45 eine Verbreiterung 97 hat, welcher Abschnitt, wäre er allein für die Führung der Kolben 43 maßgebend, ein Pendeln der Kolben erlauben würde. Dieses Pendeln wird aber dadurch verhindert, daß sich dieser Verbreiterung 97 der Abschnitt 96 der Kurvenbahn 45 des Bauteiles 92 (Fig.5,6) überlagert, so daß dieser Abschnitt bestimmend für die Zwangsführung der Kolben 43 wird. In analoger Weise wirkt der Abschnitt 96 des Bauteiles 92 führend auf die Kolben 43 in jenem Sektor 98 des Bauteiles 91, in welchem die Kurvenbahn 45 unterbrochen ist. In zumindest einem Abschnitt der Kurvenbahn 45 wird diese auch von beiden Bauteilen 91,92, begrenzt, und zwar in einem Sektor 99, welcher jenen Teil des Sektors 98 darstellt, der dem nicht verbreiterten, in den Sektor 98 mündenden Ende der Kurvenbahn 45 im Bauteil 91 entspricht. Dort wird die Kurvenbahn 45 außen von einem Umfangssteg 100 des Bauteiles 91 begrenzt, der außenseitig des Sektors 98 liegt. Innen erfolgt die Begrenzung durch einen plattenförmigen, mit spiralförmigem Umfang verlaufenden Abschnitt 101 des Bauteiles 92. Die Relativverdrehung der beiden Bauteile 91,92 ist begrenzt durch Anschläge 102,102' des Bauteiles 91 bzw. 103,103' des Bauteiles 92. In der Stellung der beiden Bauteile 91,92, in welcher die Anschläge 102,103 aneinander zur Anlage kommen, liegt auch das Stirnende 104 des Abschnittes 101 (Fig.5) an einer Seitenfläche 105 einer Verdickung des Bauteiles 91 an. Der Winkel, um welchen die beiden Bauteile 91,92 relativ zueinander verschwenkbar sind, beträgt annähernd 50°, kann jedoch bei Bedarf problemlos auch größer gemacht werden, wenn dies aufgrund der vorliegenden Erfordernisse gewünscht ist.

Zur Verdrehung der beiden, die Zwangsführung 46 für die Kolben 43 bildenden Bauteile 91,92, auch relativ zueinander, sind die beiden Bauteile 91,92 an konzentrischen Wellen 107,108 (Fig.2) befestigt, von denen die Welle 107 eine die Welle 108 führende Hohlwelle ist. In der Zwangsführung 46 der beiden Bauteile 91,92 ist das die Kolben 43 bewegende Gestänge 44 (Fig.1,2) geführt, und zwar läuft in der Kurvenbahn 45 eine Rolle 109, die am einen Ende eines Schwenkhebels 110 (Fig.2) drehbar gelagert ist, dessen anderes Ende starr auf einer Welle 111 sitzt, die in den beiden Seitenschildern 112 der Trommel 2 drehbar gelagert ist. Die Welle 111 trägt für jeden Kolben 43 einen Schwenkarm 113, dessen freies Ende mittels einer Lasche 114 gelenkig mit dem inneren Ende des Kolbens 43 verbunden ist.

Die beiden Wellen 107,108 sind konzentrisch in der Trommelwelle 66 (Fig.2) nach außen geführt und dort mit dem Antrieb 47 wirkungsmäßig verbunden. Hiezu kann der Antrieb 47 so ausgebildet sein, wie dies die Fig.18 bis 20 zeigen, es kann jedoch auch die Ausbildung gemäß den Fig.9 bis 14 gewählt werden. Diese Anordnung hat jedoch nicht den Vorteil, daß die Zeiten für den Trommelvorschub und für den Wirkprozeß unterschiedlich lang gewählt werden können. Wie bei der Ausführungsform nach den Fig.18 bis 20 erfolgt der Trommelvorschub von der Abtriebswelle 75 des Motors 7' mittels einer Kurbel 54 und einer daran angelenkten Stange 61 auf den Schwingarm 62, der beim Trommelvorschub die Trommel mittels der federbelasteten Klinke 63 mitnimmt. Durch die Nockenscheibe 71 wird hiebei die federbelastete Klinke 68 aus der Rastenreihe 65 ausgeschwenkt gehalten, so daß sich die Trommel 2 drehen kann. Sobald der Trommelvorschub beendet ist, gleitet die Rolle 70 der Klinke 68 von der Nockenscheibe 71 ab, die Klinke 68 rastet in die Rastenreihe 65 ein und die Trommel 2 wird blockiert. Während des Stillstandes der Trommel 2 werden die beiden, die Zwangsführung 46 bildenden Bauteile 91,92 gemeinsam verdreht, wodurch die Kolben 43 an den einzelnen Stationen vor- bzw.- zurückgeschoben werden. Die Verdrehung der beiden Bauteile 91,92 kann, wie dies in den Fig.18 bis 20 dargestellt ist, vom Schwingarm 62 aus erfolgen, gemäß der Ausführungsvariante nach den Fig.2 bis 14 dient jedoch hiezu eine weitere, außen angebrachte Kurvenscheibe 114 des Antriebes 47, welche über einen Kettentrieb 115 von der Abtriebswelle 75 des Motors 7' kontinuierlich angetrieben wird. Diese Kurvenscheibe 114 kann auf der gleichen Welle angeordnet sein wie die Nockenscheibe 71 und wirkt mit ihrem Umfang auf eine Rolle 116, die an einem Hebel 117 gelagert ist, der fest mit der Hohlwelle 107 des Zwangsführungsbauteiles 91 verbunden ist (Fig.2). Ein Reibbelag 118 nimmt dabei eine außenseitig angeordnete, mit der Welle 108 des Zwangsführungsbauteiles 92 verbundene Scheibe 119 mit. Diese Rückdrehung der Bauteile 91,92 wird gebremst durch einen Bremsbelag 119, welcher am während dieser Rückdrehung feststehenden, die Rolle eines Klinkenrades spielenden, die Rastenreihe 65 tragenden Bauteil angeordnet ist. Das Ende der Verschwenkung des Hebels 117 ist in Fig.14 dargestellt. In diesem Augenblick gleitet die Kurvenscheibe 114 von der Rolle 116 ab und es beginnt die Zurückführung des Hebels 117 in die in Fig.10 dargestellte Ausgangsstellung unter Einwirkung der Vorschubbewegung der Trommel 2, da über den Bremsbelag 119 und den Reibbelag 118 bei der zwecks Vorschub der Trommel 2 erfolgenden Verdrehung der Rastenreihe 65 auch die Bauteile 91,92 und somit der Hebel 117 mitgenommen werden.

Durch die Form der Kontur der Kurvenscheibe 114 läßt sich die Winkelgeschwindigkeit, mit welcher die Zwangsführung 46 für die Kolben 43 verdreht wird, nach Wunsch beeinflussen, so daß stets optimale Wirkverhältnisse gegeben sind.

Eine zusätzliche Mitnahme der Scheibe 120 durch den Hebel 117 während der Auswiege-, Wirk- und Ausstoßphase kann erfolgen durch ein mit einem Zahnkranz 121 der Scheibe 120 kämmendes Zahnrad 122, das auf einer Verlängerung 123 des Hebels 117 drehbar gelagert ist und ein Handrad 124 zur Verstellung trägt. Dieses Zahnrad 122 kämmt mit einem weiteren, an der Verlängerung 123 gelagerten Zahnrad 125, welches ein Potentiometer 126 verstellt, an welchem das mittels des Handrades 124 eingestellte Auswiegegewicht mittels eines Displays angezeigt wird (siehe auch Fig.7,8).

In den Fig.7 und 8 ist dargestellt, wie durch Verdrehung des einen, die Zwangsführung 46 bildenden Bauteiles 92 die Verhältnisse an der Portionierstelle 14 hinsichtlich des Volumens der dort zu portionierenden Teigstücke zwischen einem Maximum (Fig.7) und einem Minimum (Fig.8) geändert werden können, ohne daß diese Änderung Einfluß hat auf die Verhältnisse an der Wirkstelle 24 und an der Ablagestelle 39. Die stufenlose Veränderungsmöglichkeit des portionierten Teigvolumens wird erreicht durch die spiralförmige Gestalt eines Abschnittes 45' der Kurvenbahn 45 im Bauteil 92, welcher Abschnitt 45' sich vom Außenumfang des Bauteiles 92 bis zu einer mittigen Nabe 127 desselben erstreckt.

Die Fig.15 bis 17 zeigen eine Ausführungsvariante für die Ausbildung relativ zueinander beweglicher, die Zwangsführung 46 bildender Bauteile 91,92. Die hier aus Deutlichkeitsgründen übertrieben stark dargestellte Kurvenbahn 45 verläuft in zwei Bauteilen 91,92, die beide im wesentlichen die Form eines Kreisabschnittes haben und im Bereiche des Umfanges durch ein Gelenk 128 miteinander verbunden sind. Die Verstellung erfolgt hier nicht durch Verdrehung der beiden Bauteile 91,92 relativ zueinander, wie dies bei der Ausführungsform nach den Fig.7 und 8 der Fall war, sondern durch Relativverschwenkung der beiden Bauteile 91,92, wofür der eine Bauteil 92 mit einer kreisbogenförmig verlaufenden Verzahnung 129 versehen ist, wobei das Zentrum dieses Kreisbogens in der Achse des Gelenkes 128 liegt. Diese Verzahnung 129 kämmt mit einem Zahnrad 130, das am anderen Bauteil 91 gelagert ist und von außen verdrehbar ist, z.B. mittels des Handrades 124 (Fig.2,16). In diesem Fall ergibt sich, wie Fig.16 zeigt, für die Lagerung der beiden Kurvenscheibenbauteile 91,92 eine gegenüber Fig.2 etwas abgewandelte Konstruktion, da ja bei einer Verdrehung des Bauteiles 91 der Bauteil 92 über das Gelenk 128 mitgenommen wird.

Um die Reinigung der teigführenden Bauteile der Vorrichtung zu erleichtern, sind alle im Einfüllschacht 9 befindlichen beweglichen Bauteile, das sind die beiden Sternwalzen 11, die beiden Bürsten 18,20 der Bemehlungsvorrichtung 16 sowie der Schieber 6, nach der gleichen Richtung (Pfeile 376, Fig.29) aus dem Einfüllschacht 9 in einfacher Weise entfernbar. Hiezu hat der Einfüllschacht 9 eine abnehmbare, quer zu den Achsen der Sternwalzen 11 liegende Wand 352 (Fig.28), welche den Bereich der Vorportioniereinrichtung 10 und der Bemehlungsvorrichtung 16 abdeckt, so daß nach Abnahme dieser Wand 352 diese beiden Vorrichtungen 10,16 frei liegen. Die beiden Sternwalzen 11 sind ebenso wie die beiden walzenförmigen Bürsten 18,20 mit ihren Antriebswellen lösbar, und zwar mittels Steckschnellverbindungen 354 verbunden und nach Lösen dieser Verbindungen 354 aus dem Einfüllschacht 9 herausziehbar. Für eine solche Steckschnellverbindung 354 zeigt Fig.29 zwei Möglichkeiten: Die eine Möglichkeit ist für die Sternwalzen 11 und für die oben liegende Dosierbürste 18 dargestellt. Diese Bauteile haben Hülsen 353, welche auf die zugehörigen Antriebswellen 355 aufgesteckt sind. Die Mitnahme zur Drehung erfolgt durch Mitnehmer 356, welche von radialen Zapfen gebildet sind, die in Schlitze 357 der Hülsen 353 eingreifen. Die andere Möglichkeit ist für die unten liegende Verteilerbürste 20 dargestellt: Diese Bürste 20 hat eine mittige Welle 358, deren beide Enden mit Verlängerungen 359, 360 versehen sind. Die der Steckschnellverbindung 354 abgewendete Verlängerung 359 ist in einem Lager 361 (Fig.28) der abnehmbaren Wand 352 gelagert. Die andere Verlängerung 360 ist mit der Antriebswelle 355 der Verteilerbürste 20 kuppelbar, und zwar dadurch, daß diese Verlängerung 360 in das als Stummel 362 ausgebildete Ende der Antriebswelle 355 einsteckbar und mittels eines von einem radialen Zapfen gebildeten Mitnehmers 356 drehschlüssig kuppelbar ist, welcher Mitnehmer in einen Schlitz 357 des Stummels 362 eingreift.

Zur Sicherung der Eingriffslage dieser Bauteile können nicht dargestellte Kugelrasten vorgesehen sein.

Für den Schieber 6 ist eine andere Lösung getroffen: An seinem der Trommel 2 abgewendeten Ende hat der Schieber eine nach unten offene Ausnehmung 131, welche auch nach jener Seite offen ist, welche der Abziehseite entgegengesetzt gerichtet ist. In diese Ausnehmung 131 (Fig.28,29) greift zur Ausbildung einer Schnellkupplung 378 das obere Ende des einen Teiles 132 eines zweiteiligen Schwenkhebels 134 (Fig.1) ein, dessen unterer Teil 133 um eine horizontale Achse 136 im Gestell 1 schwenkbar gelagert ist. Die beiden Teile 132,133 des Schwenkhebels 134 sind miteinander durch die Zugfeder 8 verbunden, so daß auf den Schieber 6 die nötige Kraft zur Eindrückung des Teiges in die Aufnahmeöffnungen 3,4 aufgebracht werden kann, jedoch eine übermäßige Teigquetschung vermieden wird. Das in die Ausnehmung 131 eingreifende obere Ende des Schwenkhebelteiles 132 ist mit einer Rolle 139 versehen, welche an der der Trommel 2 benachbarten Wand 369 der Ausnehmung 131 anliegt. Der Schwenkhebelteil 132 greift durch einen Schlitz 137 der Bodenwand 138 der Führung 379 für den Schieber 6 hindurch. Die auf der gleichen Seite wie die abnehmbare Wand 352 liegende Seitenwand 372 der Führung 379 des Schiebers 6 ist um eine horizontale, am Gestell 1 befestigte Achse 373 nach unten abschwenkbar. Die abgeschwenkte Stellung ist in Fig.28 strichliert dargestellt, die vertikale Betriebsstellung mit vollen Linien. Zur Sicherung der Betriebsstellung ist ein durch einen Hebel betätigbarer Schnellverschluß 379 vorgesehen. Auch für die Wand 352 kann ein solcher Schnellverschluß 374 vorgesehen sein (Fig.28). Das untere Ende der Wand 52 kann in eine U-förmige Aufnahme 375 eingesetzt und dadurch in der Betriebslage gehalten sein. Nach Lösen des Schnellverschlusses 374 ist die Wand 352 auf diese Weise leicht abnehmbar.

Auch für die Reinigungsbürste 48 kann eine ähnliche Abziehmöglichkeit geschaffen sein, was in Fig.29 schematisch dargestellt ist. Die Zugänglichkeit zu dieser Reinigungsbürste 48 kann dadurch geschaffen werden, daß ein weiterer, in Fig.29 nicht dargestellter Wandteil des Gehäuses abnehmbar ist, welcher vor der Bürste 48 liegt, in ähnlicher Weise, wie dies für die Wand 352 dargestellt ist. Eine Alternative hiezu besteht darin, daß sich der abschwenkbare Seitenwandteil 372 bis in den Bereich der Reinigungsbürste 48 erstreckt.

Zweckmäßig reicht der abnehmbare Wandteil 352 so weit, daß er auch in den Bereich der Abscherkante 53 reicht, welche an einer in das Gestell 1 eingesetzten Brille 314 (Fig.1) aus lebensmittelechtem Kunststoff vorgesehen ist und den der Trommel 2 benachbarten untersten Abschnitt des Einfüllschachtes 9 begrenzt. Dies ermöglicht es, auch die Brille 314 in Richtung der Pfeile 376 (Fig.29), welche die Abziehrichtung der mit den Antriebswellen 55 verbundenen Organe angeben, aus dem Gestell 1 herauszuziehen, so daß die Brille 314 leicht gereinigt werden kann.

Die Reinigung der Wirkvorrichtung 25 bzw. des mit dem Teig zusammenwirkenden Wirkwerkzeuges 29 wird dadurch erleichtert, daß die gesamte Wirkvorrichtung 25 in Richtung des Pfeiles 377 (Fig.1) um die Achse 26 des Gestelles 1 von der Trommel 2 abschwenkbar ist.

Zweckmäßig liegen die abnehmbaren bzw. abschwenkbaren Wandteile 352,372 an der Bedienungsseite der Maschine, so daß die Maschine für die Reinigung von der Bedienungsseite her zugänglich ist.

In den Fig.23 bis 26 ist die bereits erwähnte Verstellung des Radius der vom Wirkwerkzeug 29 vollführten kreisenden Bewegung genauer dargestellt. Diese Verstellung geschieht durch Verdrehung des zweiten Exzenterzapfens 33 mittels der Handhabe 37. Der Radius der Kreisbewegung des Wirkwerkzeuges 29 ist am größten, wenn die Exzentrizitäten der beiden Exzenterzapfen 31,33 nach der gleichen Richtung weisen und am kleinsten, wenn diese beiden Exzentrizitäten einander entgegengerichtet sind. Zur Verstellung dieser Exzentrizität hat die Aufnahme 34 für den zweiten Exzenterzapfen 33 an ihrem oberen Ende eine Erweiterung 252 (Fig.23), in der ein verbreiterter Kopf 140 des Exzenterzapfens 33 sitzt. Dadurch kann dieser Exzenterzapfen nicht nach unten aus der Aufnahme 34 herausfallen. Der Kopf 140 trägt an seiner Deckfläche eine Quernut 254, in die ein Steg 141 einrasten kann, der am unteren Ende eines mit der Handhabe 37 verbundenen Bolzens 256 sitzt, der durch eine Feder 142 nach unten bzw. gegen die Quernut 254 gedrückt wird. Wenn der Steg 141 entgegen der Wirkung der Feder 142 angehoben wird, läßt sich die die beiden Exzenterzapfen 31,33 verbindende Scheibe 32 samt den beiden Exzenterzapfen 31, 33 relativ zur Antriebswelle 35 verdrehen. Eine Verdrehung um 180° ergibt die maximale Verstellmöglichkeit zur Änderung der wirksamen Exzentrizität. In der Betriebsstellung nach den Fig.23,24 ist diese Exzentrizität e (Fig.24) ein Maximum, in der Betriebsstellung nach den Fig.25,26 ein Minimum. Die drehschlüssige Mitnahme des Exzenterzapfens 33 durch die Antriebswelle 35 erfolgt durch einen zapfenförmigen Vorsprung 144 (Fig.24, 26), welcher vom Steg 141 seitlich wegsteht und je nach der Drehlage des Exzenterzapfens 33 in eine von zwei Rasten 259 eingreift. Wenn auch Zwischengrößen der Exentrizität e einstellbar sein sollen, dann sind mehr als zwei Rasten 259 vorzusehen.

Um zu vermeiden, daß das Wirkwerkzeug 29 mit der Antriebswelle 35 mitgedreht wird, ist eine Geradführung 143 (Fig.23 bis 26) vorhanden, die zwei Stangen 269,270 aufweist, an denen das Wirkwerkzeug 29 mittels Gleitlagern 271,272 geführt ist.

Die Erfindung ist auch anwendbar auf solche Maschinen, bei denen nur gewirkt, nicht hingegen portioniert wird, da bereits portionierte Teigstücke in die Aufnahmeöffnungen eingelegt werden, z.B. mittels eines Zufuhrbandes. In diesem Fall bietet die Erfindung die Vorteile, daß die Wirkverhältnisse nach Wunsch geändert werden können, ohne daß dies Rückwirkung hat auf die Verhältnisse an der Ablagestelle 39. An letzterer Stelle ist es aus Sicherheitsgründen wichtig, daß die Kolben 43 stets bündig mit dem Umfang der Trommel 2 abschließen, so daß in die Aufnahmeöffnungen 3 bzw.4 nicht mehr hineingegriffen werden kann. Dieser Vorteil kann natürlich auch bei den anderen, vorstehend beschriebenen Maschinentypen gewahrt werden.

Das Erfindungsprinzip läßt sich problemlos auf mehr als zwei die Zwangsführung 46 bildende Bauteile erweitern, so daß auch komplizierten Bewegungsverhältnissen der Kolben 43 an den einzelnen Bearbeitungsstationen 14,24,39 Rechnung getragen werden kann. Selbstverständlich kann auch am unteren Umfangsteil der Trommel 2 eine weitere Bearbeitungsstation vorgesehen sein, z.B. eine Station, an der die leeren Aufnahmeöffnungen 3,4 gereinigt und bzw. oder beölt und bzw. oder bemehlt werden.

Auch andere Maschinentypen sind denkbar, bei denen eine andersgeartete Behandlung des Teiges als Wirken bzw. Portionieren stattfindet, soferne es bei dieser Maschinentype auf eine Bewegung des Kolbens in seiner Aufnahmeöffnung ankommt.

Wie Fig.27 zeigt, kann der Einfüllschacht 9 oben durch einen Sicherheitsdeckel 146 abgeschlossen werden. Wird dieser Sicherheitsdeckel 146 zwecks Einfüllung von Teig 147 hochgeklappt, so gibt er einen Sicherheitsschalter 148 frei, welcher den Antrieb der Vorportioniereinrichtung 10 stillsetzt. Dadurch wird vermieden, daß die Bedienungsperson durch die Vorportioniereinrichtung verletzt werden kann.

Eine Änderung des für jede Aufnahmeöffnung 3,4 gültigen Teigvolumens kann dadurch erzielt werden, daß an der Portionierstelle 14 der Kolben 43 mehr oder weniger durch die Verdrehung der Zwangsführung 46 zurückgezogen wird. Hiefür kann ein nicht dargestelltes Verstellgetriebe vorgesehen sein, mit welchem die Ausgangslage der Verschwenkung der Zwangsführung 46 in Bezug auf die Trommel 2 verändert werden kann.

Ferner kann an der Ablagestelle 39 eine zwischen der Umlenkrolle 41 und der Trommel 2 liegende Übergabewalze angeordnet sein, welche zweckmäßig dauernd umläuft, so daß ein Vorlauf der Umlenkrolle 41 des Förderbandes 40 nicht erforderlich ist. Diese Umlenkrolle kann daher über einen Kettentrieb von der Trommel 2 angetrieben werden.

## Patentansprüche

1. Vorrichtung zum Wirken portionierter Teigstücke, bei welcher Teig, gegebenenfalls bereits portioniert, an einer Einbringestelle, insbesondere einer Portionierstelle (14), in Aufnahmeöffnungen (3,4) am Mantel einer um eine horizontale Achse (2') durch einen Antrieb (5) schrittweise verdrehbaren Trommel (2) eingefüllt und gegebenenfalls erst hiebei portioniert wird, welche Aufnahmeöffnungen (3,4) über den Umfang der Trommel (2) in gleichmäßigen Abständen voneinander verteilt angeordnet sind, wobei die in den Aufnahmeöffnungen (3,4) befindlichen Teigstücke durch ein nahe dem Umfang der Trommel (2) an einer relativ zur Einbringestelle in Drehrichtung der Trommel (2) versetzten Wirkstelle (24) angeordnetes, durch einen Exzenterzapfen (31) zu einer Kreisbewegung angetriebenes Wirkwerkzeug (29) gewirkt und danach an einer relativ zur Wirkstelle (24) in Drehrichtung der Trommel (2) versetzten Ablagestelle (39) aus den Aufnahmeöffnungen (3,4) durch in diesen mittels einer Zwangsführung (46) verstellte Kolben (43) ausgestoßen werden, und wobei vorzugsweise das Volumen der in die Aufnahmeöffnungen (3,4) eingebrachten Teigmenge durch Veränderung der Lage der Kolben (43) in den Aufnahmeöffnungen (3,4) an der Einbringestelle wählbar ist, dadurch gekennzeichnet, daß die Aufnahmeöffnungen (3,4) in zumindest zwei unterschiedlichen Größen, miteinander in Umfangsrichtung der Trommel (2) alternierend, vorgesehen sind und die Schritte der Drehbewegung der Trommel (2) dem Abstand zweier benachbarter gleichgroßer Aufnahmeöffnungen (3 bzw. 4), in Umfangsrichtung der Trommel (2) gemessen, entsprechen, wobei dem Antrieb (5) für die Drehung der Trommel (2) eine Umschalteinrichtung (50) zur Verdrehung der Trommel (2) um den Abstand zweier unterschiedlicher Aufnahmeöffnungen (3,4) zugeordnet ist, so daß in den Pausen zwischen den Trommelschritten jeweils gleich große Aufnahmeöffnungen (3 bzw. 4), jedoch wählbarer Größe, der Einbringestelle (14), der für alle Größen der Aufnahmeöffnungen (3,4) gemeinsamen Wirkstelle (24) und der Ablagestelle (39) gegenüberliegen, und daß der Radius der Kreisbewegung des Wirkwerkzeuges (29) durch Verstellung der Exzentrizität (e) des Exzenterzapfens (31) veränderbar ist.

2. Vorrichtung nach Anspruch 1, dadurch gekennzeichnet, daß der Antrieb (5) für die Trommel (2) eine mit einer den Schritten der Trommel (2) entsprechenden Rastenreihe (65) zusammenwirkende, insbesondere durch eine Feder (64) belastete Klinke (63) hat und daß diese Klinke (63) durch die Umschalteeinrichtung (50) zeitweise, insbesondere für einen der Anzahl der Größen der Aufnahmeöffnungen (3,4) entsprechenden Bruchteil eines Schrittes der Trommel (2) ausrückbar ist.

3. Vorrichtung nach Anspruch 2, dadurch gekennzeichnet, daß die Umschalteinrichtung (50) einen im Gestell (1), insbesondere entgegen der Wirkung einer Feder (85), geführten Stößel (86) hat, der auf die Klinke (63) wirkt.

4. Vorrichtung nach Anspruch 3, dadurch gekennzeichnet, daß die Klinke (63) eine Nase (88) zur Rückführung des Stößels (86) hat.

5. Vorrichtung nach einem der Ansprüche 1 bis 4, dadurch gekennzeichnet, daß die Exzentrizität (e) des Exzenterzapfens (31) relativ zur Antriebswelle (35) mittels einer von der Wirkvorrichtung (25) getragenen Schnellverstelleinrichtung (273), insbesondere einer Rastenschnellverstellung, verstellbar ist.

6. Vorrichtung nach Anspruch 5, dadurch gekennzeichnet, daß die Antriebswelle (35) eine in ihrer Achsrichtung verlaufende, jedoch exzentrisch zu ihrer Achse angeordnete Aufnahme (34) für einen zweiten Exzenterzapfen (33) aufweist, der den ersten Exzenterzapfen (31) exzentrisch zu seiner Achse trägt und in seiner Drehlage in der Aufnahme (34) einstellbar und fixierbar ist.

7. Vorrichtung nach Anspruch 6, dadurch gekennzeichnet, daß der zweite Exzenterzapfen (33) an seinem dem ersten Exzenterzapfen (31) abgewendeten Ende mit einer Handhabe (37) zur Verstellung drehschlüssig verbunden ist, welche Handhabe (37) an der dem Wirkwerkzeug (29) abgewendeten Seite der Wirkvorrichtung (25) angeordnet ist.

8. Vorrichtung nach Anspruch 7, dadurch gekennzeichnet, daß die Antriebswelle (35) und bzw. oder der zweite Exzenterzapfen (33) mit zumindest einer Rast (259) für die Fixierung der Drehstellung des zweiten Exzenterzapfens (33) versehen ist.

9. Vorrichtung nach den Ansprüchen 7 und 8, dadurch gekennzeichnet, daß eine Feder (257) vorhanden ist, welche ein Arretierglied, z.B. einen Zapfen (258), in eine von zumindest zwei, unterschiedlichen Drehstellungen des zweiten Exzenterzapfens (33) zugeordneten, Rasten (259) drückt.

10. Vorrichtung nach einem der Ansprüche 1 bis 9, dadurch gekennzeichnet, daß die Kolben (43) an einer Kurvenbahn (45) der Zwangsführung (46) geführt sind, die relativ zur Trommel (2) zumindest in den Bewegungspausen des Vorschubes der Trommel (2) verstellbar ist und daß diese Kurvenbahn (45) zumindest zwei relativ zueinander verstellbare Abschnitte (95,96) hat, die an relativ zueinander verstellbaren Bauteilen (91,92) der Zwangsführung (46) angeordnet sind.

11. Vorrichtung nach Anspruch 10, dadurch gekennzeichnet, daß die die Abschnitte (95,96) tragenden Bauteile (91,92) um ein gemeinsames Zentrum (93) relativ zueinander verdrehbar sind.

12. Vorrichtung nach Anspruch 10, dadurch gekennzeichnet, daß die die Abschnitte (95,96) tragenden Bauteile (91,92) am Umfang durch ein Gelenk (128) miteinander verbunden sind und durch eine mittige Verzahnung (129) od.dgl. spreizbar sind.

13. Vorrichtung nach einem der Ansprüche 10 bis 12, dadurch gekennzeichnet, daß zumindest einer der Abschnitte (95,96) eine Verbreiterung (97) der Kurvenbahn (45) hat, die von dem Abschnitt des anderen Bauteiles (91 bzw.92) überlappt wird.

14. Vorrichtung nach einem der Ansprüche 10 bis 13, dadurch gekennzeichnet, daß zumindest einer der Abschnitte (95,96) spiralförmig vom Umfang des Bauteiles (91,92) gegen das Zentrum desselben verläuft.

15. Vorrichtung nach einem der Ansprüche 10 bis 14, dadurch gekennzeichnet, daß der Antrieb (47) zur Verdrehung der Zwangsführung (46) eine Kurvenscheibe (114) oder Nocke oder eine gekrümmte Führungsbahn (56) aufweist, von der die Verdrehung der Zwangsführung (46) abgeleitet ist.

16. Vorrichtung nach Anspruch 15, dadurch gekennzeichnet, daß die zur Drehung angetriebene Kurvenscheibe (114) einen Schwenkhebel (117) verstellt, der auf zumindest eine, mit den die Kurvenbahnabschnitte (95,96) tragenden Bauteilen (91,92) verbundene Welle (108) bzw. Hohlwelle (107) einwirkt.

17. Vorrichtung nach Anspruch 15, dadurch gekennzeichnet, daß der Antrieb (5,47) für die Trommel (2) und für die Zwangsführung (46) eine Kurvenbahn (56) aufweist, von der sowohl die Vorschubbewegung der Trommel (2) und der Zwangsführung (46), als auch die Rückführung der Zwangsführung (46) relativ zur Trommel (2) abgeleitet sind, wobei die Zeitdauer jedes Bewegungsschrittes der Trommel (2) kürzer ist als die dazwischenliegenden Pausen.

18. Vorrichtung nach Anspruch 17, dadurch gekennzeichnet, daß auf der Abtriebswelle (75) eines Motors (7') ein Bauteil, z.B. eine Kurbel (54) oder eine Scheibe (76), sitzt, welche die Kurvenbahn (57) bewegt, wobei diese Kurvenbahn (57) oder ein sie tragender Bauteil, z.B. ein Schwenkhebel (58), mittels eines Gestänges (60) mit einem die Trommel (2) bewegenden, auf der Trommelachse sitzenden Schwingarm (62) verbunden ist.

19. Vorrichtung nach einem der Ansprüche 1 bis 18, dadurch gekennzeichnet, daß an der Ablagestelle (39) ein Förderband (40) für den Abtransport der Teigstücke (38) von der Trommel (2) vorgesehen ist, das mit Vorlauf relativ zur Rückbewegung der Zwangsführung (46) relativ zur Trommel (2) bzw. zur Ausstoßbewegung der Kolben (43) angetrieben ist.

20. Vorrichtung nach einem der Ansprüche 1 bis 19, dadurch gekennzeichnet, daß sie einen Einfüllschacht (9) für den Teig hat, in welchem Vorportionierorgane (11), insbesondere in Form zweier gegenläufig bewegter Sternwalzen, sowie eine Bemehlungsvorrichtung (16), insbesondere in Form zweier walzenförmiger Bürsten (18,20) für den Teig angeordnet sind, wobei vorzugsweise auch eine Reinigungsbürste (48) für die Trommel (2) am unteren Umfangsteil der Trommel (2) anliegt.

21. Vorrichtung nach Anspruch 20, dadurch gekennzeichnet, daß über dem Einfüllschacht (9) für den Teig ein Sicherheitsdeckel (146) angeordnet ist, der in angehobenem Zustand einen Sicherheitsschalter (148) freigibt, der den Antrieb der Vorportioniereinrichtung (10) stillsetzt.

22. Vorrichtung nach Anspruch 20 oder 21, dadurch gekennzeichnet, daß der Einfüllschacht (9) und das Gestell (1) der Vorrichtung zumindest einen abnehmbaren oder wegschwenkbaren Wandteil hat und daß nach Entfernung dieses Wandteiles bzw. dieser Wandteile die Vorportionierorgane (11') und der den Teig eindrückende Schieber (6) in der gleichen Richtung aus dem Gestell (1) herausziehbar sind.

23. Vorrichtung nach Anspruch 22, dadurch gekennzeichnet, daß eine quer zu den Achsen zweier einander entgegen um horizontale Achsen bewegter, den Teig fördernder Vorportionierorgane (11') liegende Seitenwand (352) des Einfüllschachtes (9) und eine auf der gleichen Seite liegende Seitenwand (372) einer Führung (379) eines an der Portionierstelle (14) angeordneten Eindrückwerkzeuges, insbesondere eines Schiebers (6), abnehmbar und bzw. oder wegschwenkbar sind, daß die Vorportionierorgane (11') mit ihren Antriebswellen (355) lösbar verbunden sind und nach Lösen dieser Verbindung aus dem Einfüllschacht (9) herausziehbar sind, und daß das Eindrückwerkzeug, insbesondere der Schieber (6), mit seinem Antrieb (7) mittels einer Schnellkupplung (378) verbunden ist, die nach Entfernung der seitlichen Wand (372) der Führung (379) des Eindrückwerkzeuges durch Herausziehen desselben in der gleichen Richtung lösbar ist.

24. Vorrichtung nach Anspruch 23, dadurch gekennzeichnet, daß nach Entfernung der Seitenwand (352) des Einfüllschachtes (9) auch jede Bürste (18,20) der Bemehlungsvorrichtung (16) freiliegt und von ihrer Antriebswelle (355) in der gleichen Richtung wie die Vorportionierorgane (11') abziehbar ist.

25. Vorrichtung nach Anspruch 23 oder 24, dadurch gekennzeichnet, daß die Vorportionierorgane (11') mit ihren Antriebswellen (355) mittels Schnellsteckverbindungen (354) verbunden sind.

26. Vorrichtung nach einem der Ansprüche 23 bis 25, dadurch gekennzeichnet, daß die Vorportionierorgane (11') und bzw. oder die Bürsten (18,20) der Bemehlungsvorrichtung (16) auf die Antriebswellen (355) aufsteckbare Hülsen (353) aufweisen, die mittels Mitnehmern (356) mit diesen Antriebswellen (355) drehschlüssig verbunden und von den Antriebswellen (355) abziehbar sind.

27. Vorrichtung nach einem der Ansprüche 23 bis 26, dadurch gekennzeichnet, daß die Vorportionierorgane (11') und bzw. oder die Bürsten (18,20) der Bemehlungsvorrichtung (16) Wellen (358) aufweisen, die mit den, Stummel (362) aufweisenden, Antriebswellen (355) durch mit Mitnehmern (356) versehene Steckverbindungen (354) drehschlüssig kuppelbar sind.

28. Vorrichtung nach Anspruch 27, dadurch gekennzeichnet, daß das der Steckverbindung (354) abgewendete Ende der jeweiligen Welle (358) mit einer Verlängerung (359) in einem Lager (361) der abnehmbaren oder wegschwenkbaren Wand (352) des Einfüllschachtes (9) gelagert ist.

29. Vorrichtung nach einem der Ansprüche 26 bis 28, dadurch gekennzeichnet, daß der Schieber (6) mit einem darunter befindlichen Schwenkhebel (134) seines Antriebes (7) dadurch lösbar gekuppelt ist, daß das obere Ende dieses Schwenkhebels (134) in eine nach unten und nach der der Abziehseite (Pfeil 376) entgegengesetzten Seite offene Ausnehmung (131) des Schiebers (6) eingesetzt ist.

30. Vorrichtung nach Anspruch 29, dadurch gekennzeichnet, daß das obere Ende des Schwenkhebels (134) eine Rolle (139) trägt, die an einer Wand (369) der Ausnehmung (131) anliegt.

31. Vorrichtung nach einem der Ansprüche 23 bis 30, dadurch gekennzeichnet, daß auch eine an der Trommel (2) anliegende Reinigungsbürste (48) in gleicher Weise wie die Bürsten (18,20) der Bemehlungsvorrichtung (16) abziehbar ist.

32. Vorrichtung nach einem der Ansprüche 23 bis 31, dadurch gekennzeichnet, daß die Abscherkante (23) an einer der Trommel (2) benachbarten Brille (314) vorgesehen ist, die in der gleichen Richtung aus dem Gestell (1) herausziehbar ist wie das Eindrückwerkzeug (6).

## Claims

1. A device for kneading portioned dough pieces, with which dough which has optionally already been divided into portions is - at a loading site, in particular a portioning site (14) - fed into receiving openings (3, 4) in the casing of a drum (2), rotatable stepwise about a horizontal axis (2') by means of a drive (5), and is optionally only now divided into portions, which receiving openings (3, 4) are arranged distributed over the circumference of the drum (2) at uniform distances from one another, the dough pieces located in the receiving openings (3, 4) being kneaded by means of a kneading tool (29) - which is arranged close to the circumference of the drum (2), at a kneading site (24) displaced relative to the loading site in the rotational direction of the drum (2), and which is driven by an eccentric pin (31) to execute a circular motion - and subsequently being ejected from the receiving openings (3, 4), by means of plungers (43) shifted in the latter by means of a positive guide-track (46), at a depositing site (39) displaced relative to the kneading site (24) in the rotational direction of the drum (2), and the volume of the dough quantity loaded into the receiving openings (3, 4) preferably being selectable at the loading site through alteration of the position of the plungers (43) in the receiving openings (3, 4), characterised in that the receiving openings (3, 4) are provided in at least two different sizes, the two sizes alternating with one another in the circumferential direction of the drum (2), and the steps of the rotational motion of the drum (2) correspond to the distance - measured in the circumferential direction of the drum (2) - between two adjacent same-sized receiving openings (3 or 4), a change-over device (50) for rotating the drum (2) by the distance between two differing receiving openings (3, 4) being associated with the drive (5) for rotating the drum (2), so that in the pauses between the drum steps there are in each case receiving openings (3 or 4) of the same size, but of selectable size, opposite the loading site (14), the kneading site (24) common to all sizes of receiving opening (3, 4) and the depositing site (39), and in that the radius of the circular motion of the kneading tool (29) can be altered by adjusting the eccentricity (e) of the eccentric pin (31).

2. A device in accordance with Claim 1, characterised in that the drive (5) for the drum (2) has a catch (63) which co-operates with a row of notches (65) - which corresponds to the steps of the drum (2) - and which is particularly loaded by means of a spring (64), and in that this catch (63) can be temporarily disengaged by the change-over device (50), in particular for a fraction of a drum step corresponding to the number of sizes of the receiving openings (3, 4).

3. A device in accordance with Claim 2, characterised in that the change-over device (50) has a ram (86) which is guided in the frame (1), in particular against the action of a spring (85), and which acts upon the catch (63).

4. A device in accordance with Claim 3, characterised in that the catch (63) has a projection (88) for return of the ram (86).

5. A device in accordance with any one of Claims 1 to 4, characterised in that the eccentricity (e) of the eccentric pin (31) relative to the drive shaft (35) can be adjusted by means of a rapid-action adjustment device (273) borne by the kneading device (25), in particular a notched rapid-action adjustment device.

6. A device in accordance with Claim 5, characterised in that the drive shaft (35) has a receiver (34) for a second eccentric pin (33) - this receiver (34) running in the axial direction of the drive shaft (35) but being arranged eccentric to the axis of the latter - which bears the first eccentric pin (31) eccentric to its axis and which is adjustable and securable in its rotational position in the receiver (34).

7. A device in accordance with Claim 6, characterised in that the second eccentric pin (33) is, at its end facing away from the first eccentric pin (31), connected in a rotation-locking manner to a grip (37) for adjustment, which grip (37) is arranged at the side of the kneading device (25) which faces away from the kneading tool (29).

8. A device in accordance with Claim 7, characterised in that the drive shaft (35) and/or the second eccentric pin (33) is/are provided with at least one notch (259) for securing the rotational position of the second eccentric pin (33).

9. A device in accordance with Claims 7 and 8, characterised in that there is present a spring (257) which pushes a stop member, e.g. a pin (258), into one of at least two notches (259) associated with different rotational positions of the second eccentric pin (33).

10. A device in accordance with any one of Claims 1 to 9, characterised in that the plungers (43) are guided on a curved path (45) of the positive guide-track (46), which curved path (45) is - at least in the motion intervals of advancing of the drum (2) - adjustable relative to the drum (2), and in that this curved path (45) has at least two portions (95, 96) which are adjustable relative to one another and which are arranged on component parts (91, 92) - adjustable relative to one another - of the positive guide-track (46).

11. A device in accordance with Claim 10, characterised in that the component parts (91, 92) bearing the portions (95, 96) are rotatable relative to one another about a common centre (93).

12. A device in accordance with Claim 10, characterised in that the component parts (91, 92) bearing the portions (95, 96) are at the circumference connected to one another by means of an articulation (128), and they can be spread apart by means of central toothing (129) or the like.

13. A device in accordance with any one of Claims 10 to 12, characterised in that at least one of the portions (95, 96) has a widening (97) of the curved path (45), this widening (97) being overlapped by the portion of the other component part (91 or 92 as the case may be).

14. A device in accordance with any one of Claims 10 to 13, characterised in that at least one of the portions (95, 96) runs in a spiral-shape from the circumference of the component part (91, 92) towards the centre of the latter.

15. A device in accordance with any one of Claims 10 to 14, characterised in that the drive (47) for rotating the positive guide-track (46) has a cam disc (114) or cam or a curved guideway (56), from which the rotation of the positive guide-track (46) is derived.

16. A device in accordance with Claim 15, characterised in that the cam disc (114) driven for rotation adjusts a pivoted lever (117) which acts upon at least one shaft (108) or hollow shaft (107) connected to the component parts (91, 92) bearing the curved path portions (95, 96).

17. A device in accordance with Claim 15, characterised in that the drive (5, 47) for the drum (2) and for the positive guide-track (46) has a curved path (56) from which both the advancing motion of the drum (2) and of the positive guide-track (46) as well as the return motion of the positive guide-track (46) relative to the drum (2) are derived, the duration of each movement step of the drum (2) being shorter than the intervening intervals.

18. A device in accordance with Claim 17, characterised in that a component part, for example a crank (54) or a disc (75), is located on the drive shaft (75) of a motor (7') and moves the curved path (57), this curved path (57) or a component part bearing it, e.g. a pivoted lever (58), being connected by means of a linkage (60) to a swing arm (62) which moves the drum (2) and is located on the drum shaft.

19. A device in accordance with any one of Claims 1 to 18, characterised in that at the depositing site (39) there is provided a conveyor belt (40) for transporting the dough pieces (38) away from the drum (2), this conveyor belt (40) being driven with forward motion relative to the return motion of the positive guide-track (46) relative to the drum (2) or relative to the ejecting motion of the plungers (43).

20. A device in accordance with any one of Claims 1 to 19, characterised in that it has an entry chute (9) for the dough in which there are arranged pre-portioning parts (11), in particular in the form of two star rollers moved in opposite directions, as well as a flouring device (16), in particular in the form of two cylindrical brushes (18, 20) for the dough, in addition a cleaning brush (48) for the drum (2) preferably being in contact with the lower circumferential part of the drum (2).

21. A device in accordance with Claim 20, characterised in that a safety cover (146) is arranged over the entry chute (9) for the dough, in the raised state this safety cover (146) releasing a safety switch (148) which stops the drive of the pre-portioning device (10).

22. A device in accordance with Claim 20 or 21, characterised in that the entry chute (9) and the frame (1) of the device has at least one wall part which can be detached or pivoted away, and in that after removal of this wall part or these wall parts the pre-portioning parts (11') and the slide (6) pushing in the dough can be taken out of the frame (1) in the same direction.

23. A device in accordance with Claim 22, characterised in that a lateral wall (352) of the entry chute (9) - which lateral wall (352) lies transversely to the axes of two pre-portioning parts (11') which are moved in opposite directions about horizontal axes and convey the dough - and a lateral wall (372), located on the same side as the above-mentioned lateral wall (352), of a guide (379) for a pushing-in tool arranged at the portioning site (14), in particular a slide (6), are detachable and/or can be pivoted away, in that the pre-portioning parts (11') are detachably connected to their drive shafts (355) and can be taken out of the entry chute (9) after detachment of this connection, and in that the pushing-in tool, in particular the slide (6), is connected to its drive (7) by means of a rapid action coupling (378) which after removal of the lateral wall (372) of the guide (379) of the pushing-in tool can be released through taking out the latter in the same direction.

24. A device in accordance with Claim 23, characterised in that after removal of the lateral wall (352) of the entry chute (9), each brush (18, 20) of the flouring device (16) lies exposed and can be removed from its drive shaft (355) in the same direction as the pre-portioning parts (11').

25. A device in accordance with Claim 23 or 24, characterised in that the pre-portioning parts (11') are connected to their drive shafts (355) by means of rapid-action plug connections (354).

26. A device in accordance with any one of Claims 23 to 25, characterised in that the pre-portioning parts (11') and/or the brushes (18, 20) of the flouring device (16) have sleeves (353), which sleeves (353) can be placed onto the drive shafts (355), are connected in a rotation-locking manner to these drive shafts (355) by means of entrainers (356) and can be removed from the drive shafts (355).

27. A device in accordance with any one of Claims 23 to 26, characterised in that the pre-portioning parts (11') and/or the brushes (18, 20) of the flouring device (16) have shafts (358) which can be coupled in a rotation-locking manner to the drive shafts (355), provided with stubs (362), by means of the plug connections (354) provided with entrainers (356).

28. A device in accordance with Claim 27, characterised in that the end of the shaft (358) in question which is facing away from the plug connection (354) is mounted by means of a prolongation (359) in a bearing (361) of the entry chute wall (352) which can be detached or pivoted away.

29. A device in accordance with any one of Claims 26 to 28, characterised in that the slide (6) is detachably coupled to a pivoted lever (134) of its drive (7) - which pivoted lever (134) is located beneath the slide (6) - by the upper end of this pivoted lever (134) being inserted into a recess (131) in the slide (6), which recess (131) is open downwards and towards the side opposite the removal side (arrow 376).

30. A device in accordance with Claim 29, characterised in that the upper end of the pivoted lever (134) bears a roller (139) which contacts with one wall (369) of the recess (131).

31. A device in accordance with any one of Claims 23 to 30, characterised in that a cleaning brush (48) in contact with the drum (2) can also be removed in the same manner as the brushes (18, 20) of the flouring device (16).

32. A device in accordance with any one of Claims 23 to 31, characterised in that the shearing-off edge (23) is provided on a seat (314) adjacent to the drum (2), which seat (314) can be taken out of the frame (1) in the same direction as the pushing-in tool (6).

## Revendications

1. Dispositif de mise en forme de doses de pâte dans lequel de la pâte, qui est le cas échéant prédosée, est versée, au niveau d'une position de charge, en particulier une position de prédosage (14), dans des ouvertures réceptrices (3, 4) ménagées dans l'enveloppe d'un tambour (2) susceptible de se déplacer progressivement en rotation autour d'un axe (2') horizontal par un mécanisme d'entraînement (5), pour y être alors seulement, et le cas échéant, prédosée, lesdites ouvertures réceptrices (3, 4) étant réparties à intervalles égaux à la périphérie du tambour (2), les doses de pâte à l'intérieur des ouvertures réceptrices (3, 4) étant pétries par un pétrisseur (29), qui est situé à proximité de la périphérie du tambour (2), au niveau d'une position de pétrissage (24) décalée, par rapport à la position de charge, dans le sens de rotation du tambour (2) et est entraîné par un maneton excentrique (31) en un mouvement circulaire, la pâte étant ensuite poussée hors des ouvertures réceptrices (3, 4), au niveau d'une position de décharge (39) décalée, par rapport à la position de pétrissage (24), dans le sens de rotation du tambour (2), par des pistons (43), déplacés dans lesdites ouvertures au moyen d'une came à rainure (46), le volume de la quantité de pâte introduite dans les ouvertures réceptrices (3, 4) étant de préférence définissable en modifiant la position des pistons (43) dans les ouvertures réceptrices (3, 4), au niveau de la position de charge, caractérisé en ce que les ouvertures réceptrices (3, 4) sont prévues avec au moins deux tailles différentes et disposées en alternance sur toute la périphérie du tambour (2) et en ce que les incréments du mouvement de rotation du tambour (2) correspondent à la distance qui sépare deux ouvertures réceptrices (3 ou 4) voisines de même taille, mesurée dans le sens périphérique du tambour (2), le dispositif d'entraînement (5) prévu pour entraîner en rotation le tambour (2) étant conjugué à un dispositif de commutation (50) pour déplacer le tambour (2) de la distance qui sépare deux ouvertures réceptrices (3, 4) différentes, de telle sorte que, pendant les pauses entre les incréments du tambour, chacune des ouvertures réceptrices (3 ou 4), dont la taille est identique mais définissable, se trouve située en face de la position de charge (14), de la position de pétrissage (24), commune à toutes les ouvertures réceptrices (3, 4), quelle que soit leur taille, et de la position de décharge (39), et en ce que le rayon du mouvement circulaire effectué par le pétrisseur (29) peut être modifié par la variation de la course (e) du maneton excentrique (31).

2. Dispositif selon la revendication 1, caractérisé en ce que le dispositif d'entraînement (5) du tambour (2) comprend un cliquet (63) qui agit avec une série de crans (65) correspondant aux incréments du tambour (2) et en particulier sur lequel agit un ressort (64), et en ce que ce cliquet (63) est partiellement débrayable au moyen du dispositif de commutation (50), en particulier pour une fraction d'un incrément du tambour (2) correspondant au nombre des tailles des ouvertures réceptrices (3, 4).

3. Dispositif selon la revendication 2, caractérisé en ce que le dispositif de commutation (50) présente un coulisseau (86), qui est guidé dans le support (1), en particulier en s'opposant à l'action d'un ressort (85), et qui agit sur le cliquet (63).

4. Dispositif selon la revendication 3, caractérisé en ce que le cliquet (63) possède un nez (88) pour ramener le coulisseau (86) dans sa position initiale.

5. Dispositif selon l'une des revendications 1 à 4, caractérisé en ce que la course (e) du maneton excentrique (31) est réglable par rapport à l'arbre de transmission (35) au moyen d'un dispositif de réglage rapide (273), en particulier d'un réglage rapide des crans, porté par le dispositif de pétrissage (25).

6. Dispositif selon la revendication 5, caractérisé en ce que l'arbre de transmission (35) présente un logement (34) s'étendant dans la direction de son axe mais excentré par rapport audit axe, pour recevoir un deuxième maneton excentrique (33), qui porte le premier maneton excentrique (31) de façon excentrée par rapport à son axe et qui, dans sa position de pivotement, peut être ajusté et fixé dans le logement (34).

7. Dispositif selon la revendication 6, caractérisé en ce que le deuxième maneton excentrique (33) est relié en rotation, à son extrémité opposée au premier maneton excentrique (31), à un bouton (37) qui permet son réglage, ledit bouton (37) étant disposé sur la face du dispositif de pétrissage (25) opposée au pétrisseur (29).

8. Dispositif selon la revendication 7, caractérisé en ce que l'arbre de transmission (35) et/ou le deuxième maneton excentrique (33) comporte(nt) au moins un cran d'arrêt (259) pour la fixation du deuxième maneton excentrique (33) en position de rotation.

9. Dispositif selon les revendications 7 et 8, caractérisé en ce qu'il est prévu un ressort (257) qui pousse un élément stoppeur, par exemple une butée (258), dans l'un des deux crans d'arrêt (259) au minimum qui sont associés à différentes positions de rotation du deuxième maneton (33).

10. Dispositif selon l'une des revendications 1 à 9, caractérisé en ce que les pistons (43) sont guidés le long d'une piste incurvée (45) de la came à rainure (46), la course de ladite piste étant réglable par rapport au tambour (2) au moins pendant les pauses du mouvement d'avancée du tambour (2) et en ce que cette piste incurvée (45) possède au moins deux portions (95, 96) réglables l'une par rapport à l'autre et disposées sur deux éléments (91, 92), réglables l'un par rapport à l'autre, de la came à rainure (46).

11. Dispositif selon la revendication 10, caractérisé en ce que les éléments (91, 92) portant les portions (95, 96) peuvent être déplacés en rotation l'un par rapport à l'autre autour d'un centre (93) commun.

12. Dispositif selon la revendication 10, caractérisé en ce que les éléments (91, 92) portant les portions (95, 96) sont reliés l'un à l'autre à leur périphérie par une articulation (128) et peuvent être élargis par une denture (129) centrale ou similaire.

13. Dispositif selon l'une des revendications 10 à 12, caractérisé en ce qu'au moins l'une des portions (95, 96) présente un élargissement (97) de la piste incurvée (45), qui est recouvert par la portion de l'autre élément (91 ou 92).

14. Dispositif selon l'une des revendications 10 à 13, caractérisé en ce qu'au moins l'une des portions (95, 96) s'étend en spirale depuis la périphérie de l'élément (91, 92) en direction du centre de celui-ci.

15. Dispositif selon l'une des revendications 10 à 14, caractérisé en ce que le dispositif d'entraînement (47) présente, pour le déplacement angulaire de la came à rainure (46), un disque à came (114) ou came ou une piste de guidage (56) incurvée, de laquelle est issu le déplacement de la came à rainure (46).

16. Dispositif selon la revendication 15, caractérisé en ce que le disque à came (114) entraîné en rotation déplace un levier pivotant (117) qui agit sur au moins un arbre (108) ou un arbre creux (107) raccordé aux éléments (91, 92) qui portent la portion de piste incurvée (95, 96).

17. Dispositif selon la revendication 15, caractérisé en ce que le dispositif d'entraînement (5, 47) présente pour le tambour (2) et pour la came à rainure (46) une piste incurvée (56) dont sont issus le mouvement d'avancée du tambour (2) et de la came à rainure (46) ainsi que le mouvement de retrait de la came à rainure (46) par rapport au tambour (2), la durée de chaque pas de progression du tambour (2) étant plus courte que les pauses qui interviennent entre ceux-ci.

18. Dispositif selon la revendication 17, caractérisé en ce que l'arbre de sortie (75) d'un moteur (7') porte un élément, par exemple une manivelle (54) ou une poulie (76), qui déplace la piste incurvée (57), ladite piste incurvée (57) ou un élément portant celle-ci, par exemple un levier pivotant (58), étant relié(e) au moyen d'une biellette (60) dotée d'un basculeur (62) mettant le tambour (2) en mouvement et situé sur l'axe de celui-ci.

19. Dispositif selon l'une des revendications 1 à 18, caractérisé en ce qu'une bande transporteuse (40) est prévue au niveau de la position de décharge (39) pour le déchargement des doses de pâtes (38) du tambour (2), ladite bande transporteuse étant entraînée en avance sur le mouvement de retrait de la came à rainure (46) par rapport au tambour (2) ou sur le mouvement d'avancée des pistons (439).

20. Dispositif selon l'une des revendications 1 à 19, caractérisé en ce qu'il présente une cuve de remplissage (9) pour la pâte, dans laquelle sont disposés des organes de prédosage (11'), en particulier sous la forme de deux cylindres en étoile de mouvement opposé, ainsi qu'un dispositif de farinage (16), en particulier sous la forme de deux brosses cylindriques (18, 20) pour la pâte, une brosse de nettoyage (48) pour le tambour (2) étant de préférence également prévue à la partie périphérique inférieure du tambour (2).

21. Dispositif selon la revendication 20, caractérisé en ce qu'un couvercle de sécurité (146) est disposé au dessus de la cuve de remplissage (9) de la pâte et débloque, lorsqu'il est soulevé, un commutateur de sécurité (148) qui arrête l'entraînement du dispositif de prédosage (10).

22. Dispositif selon la revendication 20 ou 21, caractérisé en ce que la cuve de remplissage (9) et le support (1) du dispositif possèdent au moins une partie de paroi amovible ou pivotante vers l'extérieur et en ce que, lorsque cette ou ces partie(s) de paroi a/ont été éloignée(s), les organes de prédosage (11') et le poussoir (6) pressant la pâte peuvent être tirés dans la même direction hors du support (1).

23. Dispositif selon la revendication 22, caractérisé en ce qu'une paroi latérale (352) de la cuve de remplissage (9), située perpendiculairement aux axes de deux organes de prédosage (11') qui se déplacent autour d'axes horizontaux en sens opposé et font avancer la pâte, ainsi qu'une paroi latérale (372), située du même côté, d'un guidage (379) d'un dispositif presseur, en particulier un poussoir (6), disposé au niveau de la position de prédosage (14), sont amovibles et/ou pivotantes vers l'extérieur, en ce que les organes de prédosage (11') sont raccordés de façon amovible à leur arbre de transmission (355) et, lorsqu'ils ont été séparés de celui-ci, peuvent être tirés hors de la cuve de remplissage (9) et en ce que le dispositif presseur, en particulier le poussoir (6), est raccordé à son dispositif d'entraînement (7) par une connexion instantanée (378), qui peut être supprimée lorsque l'on éloigne la paroi latérale (372) du guidage (379) du dispositif presseur, en tirant celui-ci dans la même direction.

24. Dispositif selon la revendication 23, caractérisé en ce que, après avoir éloigné la paroi latérale (352) de la cuve de remplissage (9), chaque brosse (18, 20) du dispositif de farinage (16) est débloquée et peut être retirée de son arbre de transmission (355) en tirant dans la même direction que pour les organes de prédosage (11').

25. Dispositif selon la revendication 23 ou 24, caractérisé en ce que les organes de prédosage (11') sont raccordés à leur arbre de transmission (355) par un dispositif de raccordement instantané (354).

26. Dispositif selon l'une des revendications 23 à 25, caractérisé en ce que les organes de prédosage (11') et/ou les brosses (18, 20) du dispositif de farinage (16) présentent des enveloppes (353) qui peuvent être enfilées sur les arbres de transmission (355), qui sont raccordées en rotation avec ces arbres de transmission (355) au moyen d'entraîneurs (356) et qui peuvent être retirées des arbres de transmission (355).

27. Dispositif selon l'une des revendications 23 à 26, caractérisé en ce que les organes de prédosage (11') et/ou les brosses (18, 20) du dispositif de farinage (16) présentent des arbres (358) qui peuvent être couplés en rotation avec les arbres de transmission (355), comportant des embouts (362), par des cavaliers (354) dotés d'entraîneurs (356).

28. Dispositif selon la revendication 27, caractérisé en ce que l'extrémité de l'arbre (358) correspondant qui est opposée au cavalier (354) est montée rotative avec un prolongement (359) sur un palier (361) de la paroi (352) amovible ou pivotante vers l'extérieur de la cuve de remplissage (9).

29. Dispositif selon l'une des revendications 26 à 28, caractérisé en ce que le poussoir (6) est relié de façon amovible à un levier pivotant (134), situé en dessous de celui-ci, de son dispositif d'entraînement (7) et en ce que l'extrémité supérieure de ce levier pivotant (134) est placée dans un évidement (131) du poussoir (6), ouvert vers le bas et en direction de la face opposée à la face de décharge (flèche 376).

30. Dispositif selon la revendication 29, caractérisé en ce que l'extrémité supérieure du levier pivotant (134) porte un rouleau (139), qui s'appuie sur une paroi (369) de l'évidement (131).

31. Dispositif selon l'une des revendications 23 à 30, caractérisé en ce qu'une brosse de nettoyage (48), qui s'appuie également sur le tambour (2), peut être retirée de la même façon que les brosses (18, 20) du dispositif de farinage (16).

32. Dispositif selon l'une des revendications 23 à 31, caractérisé en ce que l'arête de cisaillement (23) est prévue sur une lunette (314) située au voisinage du tambour (2) et qui peut être retirée hors du support (1) en tirant dans la même direction que pour le dispositif presseur (6).
